# EUROPEAN PATENT APPLICATION

(11) **EP 3 611 785 A1**
(43) Date of publication of application: **19.02.2020**
(21) Application number: 18784550.8
(22) Date of filing: 13.04.2018
(51) Int. Cl.: H01M 4/525, H01M 4/505, H01M 4/485, H01M 10/44, H01M 10/052, C01G 53/00

(54) **CATHODE ACTIVE MATERIAL, METHOD FOR MANUFACTURING SAME, AND LITHIUM SECONDARY BATTERY COMPRISING SAME**

(30) Priority: 13.04.2017 KR 20170048054
(71) Applicant: IUCF-HYU (Industry-University Cooperation Foundation Hanyang University), Seoul 04763 (KR)
(72) Inventor: SUN, Yang-Kook, Seoul, 06288 (KR); KIM, Un Hyuck, Gunpo-si Gyeonggi-do 15813 (KR)
(74) Representative: Prüfer & Partner mbB Patentanwälte · Rechtsanwälte
(86) International application number: PCT/KR2018/004343
(87) International publication number: WO 2018/190675

(57) **Abstract**

Provided is a cathode active material. The cathode active material has a nickel content of 60 mol% or more, comprises lithium and an addition metal, and has a first crystal structure having an intrinsic lattice constant in a c-axis direction. In the charging and discharging process, a second crystal structure, having a longer lattice constant in the c-axis direction than the first crystal structure, and a third crystal structure, having a shorter lattice constant in the c-axis direction than the first crystal structure, are generated. By the addition metal, the amount of change in the production ratio of the second crystal structure and the third crystal structure generated in the charging and the discharging process is reduced.

## Description

### BACKGROUND OF THE INVENTION

### 1. Field of the invention

The present invention relates to a cathode active material, a method for manufacturing the same, and a lithium secondary battery including the cathode active material.

### 2. Description of the Prior Art

With the development of portable mobile electronic devices such as smartphones, MP3 players and tablet PCs, a demand for secondary batteries capable of storing electrical energy has been explosively increased. In particular, since electric vehicles, medium and large energy storage systems, and portable devices requiring high energy density have appeared, a demand for lithium secondary batteries has been increased.

Due to such an increase in the demand for lithium secondary batteries, research and development on a cathode active material used in the lithium secondary batteries have been conducted. For example, Korean Unexamined Patent Publication No. 10-2014-0119621 (Application No. 10-2013-0150315) discloses a secondary battery which uses a precursor for manufacturing a lithium-rich cathode active material including nickel, manganese, and cobalt to adjust a type and a composition of a metal that is to be substituted in the precursor and to adjust a type and an additive amount of a metal that is to be added, so that high-capacity and long-lifespan characteristics can be obtained.

### SUMMARY OF THE INVENTION

One technical object of the present invention is to provide a highly-reliable cathode active material, a method for manufacturing the same, and a lithium secondary battery including the cathode active material.

Another technical object of the present invention is to provide a high-capacity cathode active material, a method for manufacturing the same, and a lithium secondary battery including the cathode active material.

Still another technical object of the present invention is to provide a long-lifespan cathode active material, a method for manufacturing the same, and a lithium secondary battery including the cathode active material.

Yet another technical object of the present invention is to provide a cathode active material with improved thermal stability, a method for manufacturing the same, and a lithium secondary battery including the cathode active material.

Still yet another technical object of the present invention is to minimize deterioration of lifespan characteristics of a lithium secondary battery formed of a cathode active material including high-concentration nickel.

Even still another technical object of the present invention is to provide a cathode active material for an electric vehicle, a method for manufacturing the same, and a lithium secondary battery including the cathode active material.

The technical objects of the present invention are not limited to the above-described objects.

In order to achieve the technical objects, the present invention provides a cathode active material.

In accordance with an aspect of the present invention, the cathode active material includes: at least 60 mol% of nickel; lithium; and an addition metal, wherein the cathode active material has a first crystal structure having an intrinsic lattice constant in a c-axis direction, wherein a second crystal structure having a lattice constant longer than the lattice constant of the first crystal structure in the c-axis direction and a third crystal structure having a lattice constant shorter than the lattice constant of the first crystal structure in the c-axis direction are generated in a charging and discharging process, and wherein an amount of a change in a production ratio of the second crystal structure and the third crystal structure, which are generated in the charging and discharging process, is reduced by the addition metal.

According to one embodiment, when a number of charging and discharging cycles is 100 in a graph for measuring a differential capacity according to the number of charging and discharging cycles, an amount of reduction of an integrated area may be in a range of 4.1 V to 4.3 V is 10 % or less.

According to one embodiment, the addition metal may include at least one of zirconium, titanium, aluminum, tungsten, molybdenum, niobium, tantalum, bismuth, ruthenium, magnesium, zinc, gallium, vanadium, chromium, calcium, strontium, or tin.

According to one embodiment, the addition metal may include titanium, and the addition metal may be contained less than 3 mol%.

According to one embodiment, the addition metal may include zirconium, and the addition metal may be contained less than 2 mol%.

According to one embodiment, the addition metal may include aluminum, and the addition metal may be contained less than 2 mol%.

According to one embodiment, the first crystal structure may include a trigonal crystal structure.

According to one embodiment, the addition metal may have a uniform concentration in particles.

In accordance with an aspect of the present invention, the cathode active material includes: at least 60 mol% of nickel; lithium; and an addition metal, wherein the cathode active material has a first crystal structure having an intrinsic lattice constant in a c-axis direction, wherein a second crystal structure having a lattice constant longer than the lattice constant of the first crystal structure in the c-axis direction and a third crystal structure having a lattice constant shorter than the lattice constant of the first crystal structure in the c-axis direction are generated in a charging and discharging process, and wherein an amount of a change in a production ratio of the second crystal structure and the third crystal structure, which are generated in the charging and discharging process, is controlled according to a concentration of the nickel and a concentration of the addition metal to control a charging and discharging capacity in a range of 4.1 V to 4.3 V.

According to one embodiment, the cathode active material may further include secondary particles in which primary particles are aggregated, wherein the primary particles may extend from a center of the secondary particles in a radial direction.

In order to achieve the technical objects, the present invention provides a lithium secondary battery.

In accordance with an aspect of the present invention, the lithium secondary battery includes: a cathode including a cathode active material according to the above-described embodiments; an anode spaced apart from the cathode; and an electrolyte disposed between the cathode and the anode.

In order to achieve the technical objects, the present invention provides a method for manufacturing a cathode active material.

In accordance with an aspect of the present invention, the method for manufacturing the cathode active material includes: preparing a cathode active material precursor including at least one of nickel, cobalt, manganese, or aluminum; mixing an addition metal source including an addition metal with the cathode active material precursor; and baking a mixture of the cathode active material precursor and the addition metal source with a lithium salt.

According to one embodiment, the cathode active material precursor may include nickel, and the nickel may be contained by at least 60 mol%.

According to one embodiment, the method may further include mixing the mixture of the cathode active material precursor and the addition metal source with the lithium salt before the baking of the mixture of the cathode active material precursor and the addition metal source with the lithium salt.

According to one embodiment, the addition metal source may include an oxide of the addition metal and a hydroxide of the addition metal.

The cathode active material according to the embodiment of the present invention may include high-concentration nickel which is at least 60 mol%, and may have a first crystal structure having an intrinsic lattice constant in a c-axis direction. A second crystal structure having a lattice constant longer than the lattice constant of the first crystal structure in the c-axis direction and a third crystal structure having a lattice constant shorter than the lattice constant of the first crystal structure in the c-axis direction may be generated in the cathode active material in a charging and discharging process of a lithium secondary battery including the cathode active material, and an amount of a change in a production ratio of the second crystal structure and the third crystal structure, which are generated in the charging and discharging process, may be reduced by the addition metal.

Accordingly, a lithium secondary battery with an improved charging and discharging capacity and a long lifespan can be provided.

### BRIEF DESCRIPTION OF THE DRAWINGS

FIG. 1 is a view for describing a cathode active material according to an embodiment of the present invention.
FIG. 2 is a view for describing primary particles included in the cathode active material according to the embodiment of the present invention, showing a section taken along line A-B of FIG. 1.
FIG. 3 is a view illustrating EDS mapping data of a cathode active material precursor according to Example 1-2 of the present invention.
FIG. 4 is a view illustrating EDS mapping data of a cathode active material precursor according to Comparative Example 2 of the present invention.
FIG. 5 is a photographic view illustrating an SEM photograph of the cathode active material precursor according to Example 1-2 of the present invention.
FIG. 6 is a photographic view illustrating an SEM photograph of the cathode active material precursor according to Comparative Example 2 of the present invention.
FIG. 7 is a photographic view illustrating EDS mapping data and SEM photographs of the cathode active material precursor according to Comparative Example 2 of the present invention.
FIG. 8 is a graph obtained by measuring lifespan characteristics of lithium secondary batteries including the cathode active materials according to Example 1-2 and Comparative Example 2 of the present invention.
FIG. 9 is a graph obtained by measuring capacity characteristics of lithium secondary batteries including cathode active materials according to Examples 1-1 to 1-4 and Comparative Example 1 of the present invention.
FIG. 10 is a graph obtained by measuring lifespan characteristics of the lithium secondary batteries including the cathode active materials according to Examples 1-1 to 1-4 and Comparative Example 1 of the present invention.
FIGS. 11 to 15 are graphs obtained by measuring differential capacities of the lithium secondary batteries including the cathode active materials according to Comparative Example 1 and Examples 1-1 to 1-4 of the present invention.
FIG. 16 is a graph for describing capacity changes according to the number of charging and discharging cycles of the lithium secondary batteries including the cathode active materials according to Comparative Example 1 and Examples 1-1 to 1-4 of the present invention.
FIG. 17 is a graph obtained by measuring capacity characteristics of lithium secondary batteries including cathode active materials according to Examples 2-1 to 2-3 and Comparative Example 1 of the present invention.
FIG. 18 is a graph obtained by measuring lifespan characteristics of lithium secondary batteries including cathode active materials according to Examples 2-1 to 2-3 and Comparative Example 1 of the present invention.
FIGS. 19 to 21 are graphs obtained by measuring differential capacities of the lithium secondary batteries including the cathode active materials according to Examples 2-1 to 2-3 of the present invention.
FIGS. 22 to 24 are photographic views illustrating SEM photographs showing sections of the cathode active materials according to Example 2-2 and Comparative Example 1 of the present invention.
FIG. 25 is a graph obtained by measuring a surface resistance of the cathode active material according to Example 2-2 of the present invention.
FIG. 26 is a graph obtained by measuring a surface resistance of the cathode active material according to Comparative Example 1 of the present invention.
FIG. 27 is a graph for comparing R_{ct} values of the cathode active materials according to Example 2-2 and Comparative Example 1 of the present invention.
FIG. 28 is a graph obtained by measuring thermal stability of the cathode active materials according to Example 2-1, Example 2-2, and Comparative Example 1 of the present invention.
FIG. 29 is a graph obtained by measuring capacity characteristics of lithium secondary batteries including cathode active materials according to Examples 3-1 to 3-3 and Comparative Example 3 of the present invention.
FIG. 30 is a graph obtained by measuring lifespan characteristics of lithium secondary batteries including cathode active materials according to Examples 3-1 to 3-3 and Comparative Example 3 of the present invention.
FIGS. 31 to 35 are graphs obtained by measuring differential capacities of lithium secondary batteries including cathode active materials according to Comparative Example 3 and Examples 3-1 to 3-4 of the present invention.
FIGS. 36 to 39 are graphs obtained by measuring surface resistances of the cathode active materials according to Comparative Example 3 and Examples 3-1 to 3-3 of the present invention.
FIG. 40 is a graph obtained by measuring thermal stability of the cathode active materials according to Comparative Example 3, Example 3-1, and Example 3-3 of the present invention.
FIG. 41 is a graph obtained by measuring capacity characteristics of the lithium secondary batteries including the cathode active materials according to Comparative Example 1 and Examples 1-1, 1-2, 2-2, and 3-4 of the present invention.
FIG. 42 is a graph obtained by measuring lifespan characteristics of the lithium secondary batteries including the cathode active materials according to Comparative Example 1 and Examples 1-1, 1-2, 2-2, and 3-4 of the present invention.
FIGS. 43 and 44 are graphs for describing capacity changes according to the number of charging and discharging cycles of the lithium secondary batteries including the cathode active materials according to Comparative Example 1 and Examples 1-1, 1-2, 2-2, and 3-4 of the present invention.
FIG. 45 is a graph obtained by measuring particle strengths of the cathode active materials according to Comparative Example 1, Examples 1-1 to 1-4, and Example 2-2 of the present invention.
FIGS. 46 to 49 are graphs illustrating differential capacities to describe an amount of a change in H2 and H3 phases according to a nickel content.
FIG. 50 is a graph for describing a capacity change according to the number of charging and discharging cycles of the lithium secondary battery using the cathode active material of FIG. 47.
FIG. 51 is a graph obtained by measuring lifespan characteristics of the lithium secondary batteries including the cathode active materials based on a nickel concentration according to Examples of the present invention.
FIG. 52 is a block diagram illustrating an electric vehicle according to one embodiment of the present invention.
FIG. 53 is a perspective view illustrating the electric vehicle according to one embodiment of the present invention.
FIG. 54 is a view for describing a battery pack according to one embodiment of the present invention.

### DETAILED DESCRIPTION OF THE EXEMPLARY EMBODIMENTS

Hereinafter, preferred embodiments of the present invention will be described in detail with reference to the accompanying drawings. However, the technical spirit of the present invention is not limited to the embodiments, but may be realized in different forms. The embodiments introduced here are provided to sufficiently deliver the spirit of the present invention to those skilled in the art so that the disclosed contents may become thorough and complete.

When it is mentioned in the specification that one element is on another element, it means that the first element may be directly formed on the second element or a third element may be interposed between the first element and the second element. Further, in the drawings, the thicknesses of the membrane and areas are exaggerated for efficient description of the technical contents.

Further, in the various embodiments of the present invention, the terms such as first, second, and third are used to describe various elements, but the elements are not limited to the terms. The terms are used only to distinguish one element from another element. Accordingly, an element mentioned as a first element in one embodiment may be mentioned as a second element in another embodiment. The embodiments illustrated here include their complementary embodiments. Further, the term "and/or" in the specification is used to include at least one of the elements enumerated in the specification.

In the specification, the terms of a singular form may include plural forms unless otherwise specified. Further, the terms "including" and "having" are used to designate that the features, the numbers, the steps, the elements, or combination thereof described in the specification are present, and may be understood that one or more other features, numbers, step, elements, or combinations thereof may be added.

Further, in the following description of the present invention, a detailed description of known functions and configurations incorporated herein will be omitted when it may make the subject matter of the present invention unnecessarily unclear.

In addition, in the present specification, a crystal system may be composed of seven systems including a triclinic system, a monoclinic system, an orthorhombic system, a tetragonal system, a trigonal or rhombohedral system, a hexagonal system, and a cubic system.

Further, in the present specification, when it is assumed that the sum of metals other than lithium and oxygen in a cathode active material or a cathode active material precursor is 100 %, the term "mol%" is interpreted as a meaning that represents the content of any metal contained in the cathode active material or the cathode active material precursor.

Furthermore, in the present specification, the expression "a charging and discharging capacity is controlled in a specific range" is interpreted as a meaning that the charging and discharging capacity can be controlled in a range including the specific range, not a meaning that the charging and discharging capacity is controlled within the specific range.

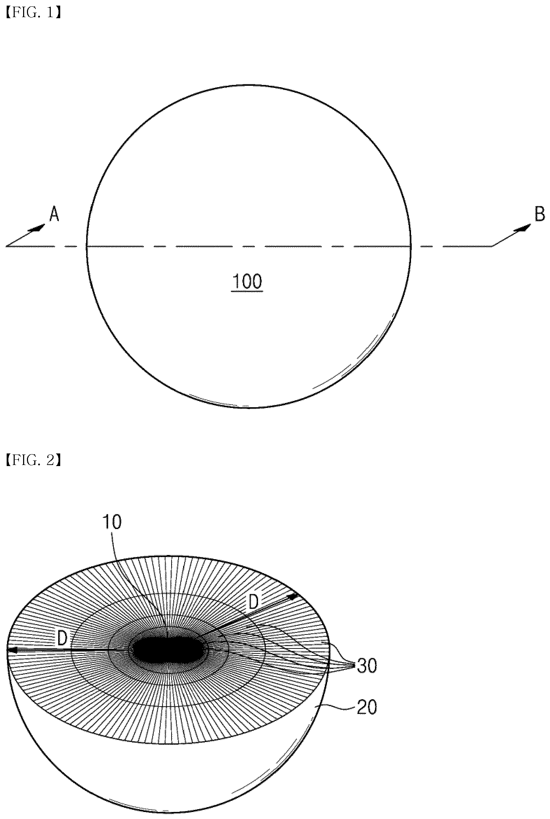

FIG. 1 is a view for describing a cathode active material according to an embodiment of the present invention, and FIG. 2 is a view for describing primary particles included in the cathode active material according to the embodiment of the present invention, showing a section taken along line A-B of FIG. 1.

Referring to FIG. 1, a cathode active material 100 according to an embodiment of the present invention may include nickel. The cathode active material 100 may include: at least one of cobalt, manganese, or aluminum; lithium; and an addition metal in addition to nickel. In other words, the cathode active material may be an oxide including: at least one of cobalt, manganese, or aluminum; nickel; lithium; and the addition metal.

For example, the addition metal may include at least one of zirconium, titanium, or aluminum. Alternatively, as another example, the addition metal may include at least one of tungsten, molybdenum, niobium, tantalum, bismuth, ruthenium, magnesium, zinc, gallium, vanadium, chromium, calcium, strontium, or tin.

For example, the cathode active material 100 may be a metal oxide including nickel, lithium, the addition metal, and oxygen. Alternatively, as another example, the cathode active material 100 may be a metal oxide including nickel, cobalt, lithium, the addition metal, and oxygen. Alternatively, as another example, the cathode active material 100 may be a metal oxide including nickel, cobalt, manganese, lithium, the addition metal, and oxygen. Alternatively, as another example, the cathode active material 100 may be a metal oxide including nickel, cobalt, aluminum, lithium, the addition metal, and oxygen. The technical spirit according to the embodiment of the present invention can be applied to the cathode active material containing various materials.

According to one embodiment, the cathode active material 100 may include at least 60 mol% of nickel.

According to one embodiment, the addition metal may be provided in the form of an oxide or a hydroxide. For example, the addition metal may include at least one of a titanium oxide, an aluminum oxide, an aluminum hydroxide, or a zirconium oxide.

According to one embodiment, the addition metal may have a substantially uniform concentration in particles of the cathode active material 100. In other words, as will be described below, even if the cathode active material 100 is prepared by a method including mixing an addition metal source including the addition metal with the cathode active material precursor, the addition metal may be distributed substantially uniformly in the particles of the cathode active material 100.

According to one embodiment, a concentration of at least one of nickel, cobalt, manganese, or aluminum may be substantially constant in the cathode active material 100. Alternatively, according to another embodiment, the concentration of at least one of nickel, cobalt, manganese, or aluminum in the cathode active material 100 may be set to have a concentration gradient over all the particles in a direction toward a surface of the particles from a center of the particles, or to have a concentration gradient in a portion of the particles. Alternatively, according to another embodiment, the cathode active material 100 may include a core portion and a shell portion having a metal concentration (at least one of nickel, cobalt, manganese, or aluminum) different from a metal concentration of the core portion. The technical spirit according to the embodiment of the present invention can be applied to the cathode active material having various structures and forms.

According to one embodiment, the cathode active material 100 may be represented by <Chemical Formula 1> as follows.

<Chemical Formula 1> LiNiₐM1_{b}M2_{c}M3_{d}O₂

In <Chemical Formula 1>, M1, M2, and M3 may denote one selected from cobalt, manganese, or aluminum, 0.5≤a<1, 0≤b<1, 0≤c<1, 0<d≤0.01, and M1, M2, and M3 may be mutually different metals.

In <Chemical Formula 1>, M3 may be the addition metal.

The cathode active material 100 may include primary particles 30 and secondary particles in which the primary particles 30 are aggregated.

The primary particles 30 may extend toward a surface 20 of the secondary particles in a radial direction in one region inside the secondary particles. The one region inside the secondary particles may be a center 10 of the secondary particles. In other words, the primary particles 30 may be in the form of a rod shape extending toward the surface 20 of the secondary particles in the one region inside the secondary particles.

Transfer paths of metal ions (e.g. lithium ions) and electrolytes may be provided between the primary particles 30 having the rod shape, that is, between the primary particles 30 extending in a direction D toward the surface 20 from the center 10 of the secondary particles. Accordingly, in the cathode active material according to the embodiment of the present invention, charging and discharging efficiency of a secondary battery can be improved.

According to one embodiment, the primary particles 30 relatively adjacent to the surface 20 of the secondary particles may have a longer length in the direction from the center 10 inside the secondary particles toward the surface 20 of the secondary particles as compared with the primary particles 30 relatively adjacent to the center 10 inside the secondary particles. In other words, in at least a portion of the secondary particles extending from the center 10 toward the surface 20 of the secondary particles, a length of the primary particles 30 may increase as the primary particles 30 become adjacent to the surface 20 of the secondary particles.

According to one embodiment, the cathode active material 100 may have a trigonal or rhombohedral crystal structure. The crystal structure of the cathode active material 100 may have an a-axis and a c-axis. The cathode active material 100 may have an intrinsic lattice constant in a c-axis direction.

In a charging and discharging process of a lithium secondary battery including the cathode active material 100, the intrinsic lattice constant may be increased or decreased in the c-axis direction. In other words, when the cathode active material 100 has a first crystal structure having an intrinsic lattice constant of a first length in the c-axis direction, in the charging and discharging process, a second crystal structure having a second length longer than the first length in the c-axis direction and/or a third crystal structure having a third length shorter than the first length in the c-axis direction may be generated. The increase and decrease of the lattice constant in the c-axis direction may significantly change a volume of the cathode active material 100. Accordingly, when a production ratio of the second crystal structure and the third crystal structure, which have the lattice constants increased or decreased in the c-axis direction, is not constant, but decreased or increased according to the number of charging and discharging cycles, lifespan characteristics of the secondary battery may be significantly reduced. In particular, when preparing the cathode active material 100 to include high-concentration nickel (e.g., at least 60 mol%) in order to improve a capacity of the lithium secondary battery, the production ration of the second crystal structure and the third crystal structure may be significantly reduced according to the number of the charging and discharging cycles. Therefore, the lifespan characteristics of the lithium secondary battery may be significantly reduced.

However, in the cathode active material 100 according to the embodiment of the present invention, the production ratio of the crystal structure in which the lattice constant is increased or decreased in the c-axis direction may remain substantially constant, or a chance in the production ratio of the crystal structure in which the lattice constant is increased or decreased in the c-axis direction may be minimized. In other words, even if the cathode active material 100 is prepared to include the high-concentration nickel (e.g., at least 60 mol%), the production ratio of the second crystal structure and the third crystal structure may be prevented from being significantly reduced according to the number of the charging and discharging cycles by the addition metal included in the cathode active material 100. Accordingly, a cathode active material having high-capacity and long-lifespan characteristics and a lithium secondary battery including the cathode active material may be provided.

Hereinafter, a method for manufacturing a cathode active material according to the embodiment of the present invention will be described.

A base aqueous solution including at least one of nickel, cobalt, manganese, or aluminum may be prepared. When the base aqueous solution includes nickel, for example, the base aqueous solution may be nickel sulfate. When the base aqueous solution includes cobalt, for example, the base aqueous solution may be cobalt sulfate. When the base aqueous solution includes manganese, the base aqueous solution may be manganese sulfate. When the base aqueous solution includes a plurality of metals of nickel, cobalt, manganese, or aluminum, the base aqueous solution may include a plurality of metal salt aqueous solutions.

The base aqueous solution may be provided to a reactor to prepare a cathode active material precursor including a metal hydroxide including at least one of nickel, cobalt, manganese, or aluminum. In addition to the base aqueous solution, an ammonia solution may be further provided to the reactor.

An addition metal source including the addition metal may be prepared. According to one embodiment, the addition metal source may be an oxide of the addition metal or a hydroxide of the addition metal. The addition metal source and the cathode active material precursor may be physically mixed (e.g., ball mill or hand mix) to prepare a cathode active material precursor doped with the addition metal. The addition metal may be provided in a state in which the cathode active material precursor, that is, the metal hydroxide is coated with addition metal.

The cathode active material precursor doped with the addition metal may be baked with lithium salt, so that a cathode active material including at least one of nickel, cobalt, manganese, or aluminum, lithium, and a metal oxide doped with the addition metal may be prepared.

According to one embodiment, the cathode active material precursor and the addition metal source may be mixed, and then the lithium salt may be mixed with a mixture obtained by mixing the cathode active material precursor with the addition metal source. Accordingly, the addition metal source may be prevented from reacting with the lithium salt first, and the cathode active material precursor may be easily reacted with the addition metal source.

Further, according to one embodiment, before baking the mixture, which is obtained by mixing the cathode active material precursor with the addition metal source, with lithium salt, the mixture of the cathode active material precursor and the addition metal source may be mixed with the lithium salt. For example, the mixture of the cathode active material precursor and the addition metal source may be mixed with the lithium salt by a physical mixing process (e.g., ball mill or hand mix).

Hereinafter, a specific method for manufacturing the cathode active material according to the embodiment of the present invention described above will be described.

### Preparation of Cathode Active Materials According to Examples 1-1 to 1-4

In this case, 4.5 liters of distilled water was put into a coprecipitation reactor (capacity of 17 L, and rotary motor output of at least 750 W), an N₂ gas was supplied to the reactor at a rate of 2.5 liters/minute, and stirring was performed at 350 rpm while maintaining a temperature of the reactor at 45 °C. A nickel sulfate aqueous solution, a cobalt sulfate aqueous solution, and a manganese sulfate aqueous solution having a concentration of 2 M at a rate of 0.187 liters/hour, a sodium hydroxide aqueous solution having a concentration of 4M at the rate of 0.187 liters/hour, and an ammonia aqueous solution having a concentration of 10.5 M at a rate of 0.043 liters/hour were continuously added to the reactor for 15 hours to 35 hours to prepare a metal composite hydroxide of Ni_{0.90}Co_{0.05}Mn_{0.05}(OH)₂.

The prepared metal composite hydroxide of Ni_{0.90}Co_{0.05}Mn_{0.05}(OH)₂ was filtered, washed with water, and dried in a vacuum dryer at 110 °C for 12 hours. TiO₂ was prepared as an addition metal source including an addition metal of Ti.

According to Example 1-1, the metal composite hydroxide of Ni_{0.90}Co_{0.05}Mn_{0.05}(OH)₂ and TiO₂ were mixed with each other by a ball mill at 100 rpm for 7 hours to prepare a cathode active material precursor according to Example 1-1, which is doped with 0.5 mol% of Ti.

In the same conditions and methods as in Example 1-1, cathode active material precursors according to Example 1-2, Example 1-3, and Example 1-4, which are respectively doped with 1.0 mol%, 2.0 mol%, and 3.0 mol% of Ti, were prepared.

After the cathode active material precursors according to Examples 1-1 to 1-4 and a lithium hydroxide (LiOH.H₂O) are mixed with each other by the ball mill at a molar ratio of 1:1 at 200 rpm for 1 hour, preliminary baking was performed by heating at a heating rate of 2 °C/min and maintaining at 450 °C for 5 hours. Subsequently, baking was performed at 750 °C for 10 hours, so that cathode active material powders according to Examples 1-1 to 1-4 were prepared as shown in [Table 1] below.

**[Table 1]**

| Classification | Chemical Formula |
|---|---|
| Example 1-1 | Li [(Ni_{0.90}Co_{0.05}Mn_{0.05-})_{0.995}Ti_{0.005}]O₂ |
| Example 1-2 | Li [(Ni_{0.90}Co_{0.05}Mn_{0.05-})_{0.99}Ti_{0.01}]O₂ |
| Example 1-3 | Li [ (Ni_{0.90}Co_{0.05}Mn_{0.05-}) _{0.98}Ti_{0.02}]O₂ |
| Example 1-4 | Li [ (Ni_{0.90}Co_{0.05}Mn_{0.05-})_{0.97}Ti_{0.03}]O₂ |

### Preparation of Cathode Active Material According to Comparative Example 1

In the method for manufacturing the cathode active material according to Examples 1-1 to 1-4, a ball mill process with TiO₂ which is the addition metal source was omitted to prepare a cathode active material of Li[Ni_{0.90}Co_{0.05}Mn_{0.05-}]O₂.

### Preparation of Cathode Active Material According to Comparative Example 2

A cathode active material was prepared in the same manner as the method for manufacturing the cathode active material according to Example 1-2, wherein the prepared metal composite hydroxide of Ni_{0.90}Co_{0.05}Mn_{0.05}(OH)₂, the addition metal source of TiO₂, and the lithium salt were mixed and baked at 100 rpm for 7 hours to prepare the cathode active material of Li[(Ni_{0.90}Co_{0.05}Mn_{0.05-})₀.₉₉Ti_{0.01}]O₂ according to Comparative Example 2.

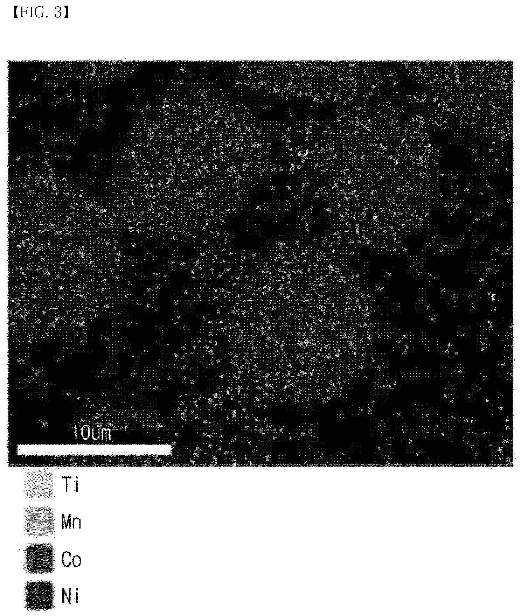

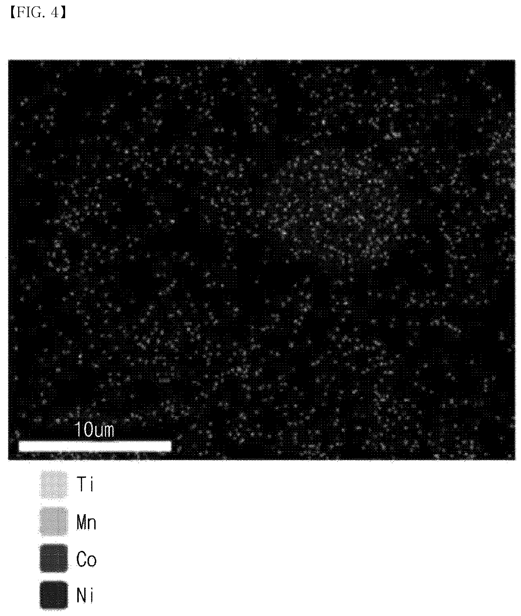

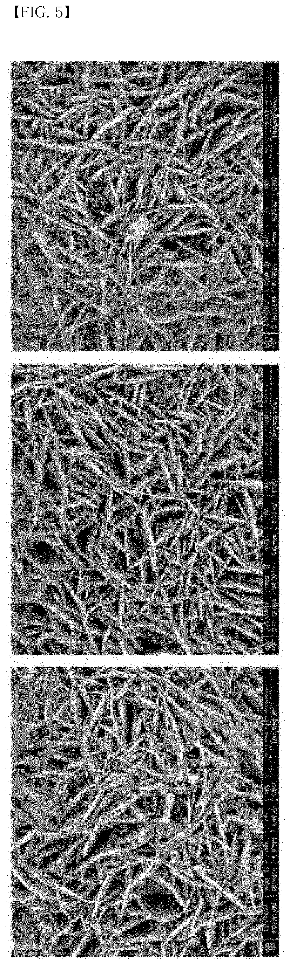

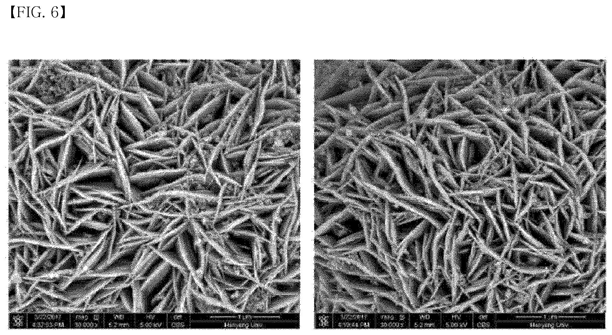

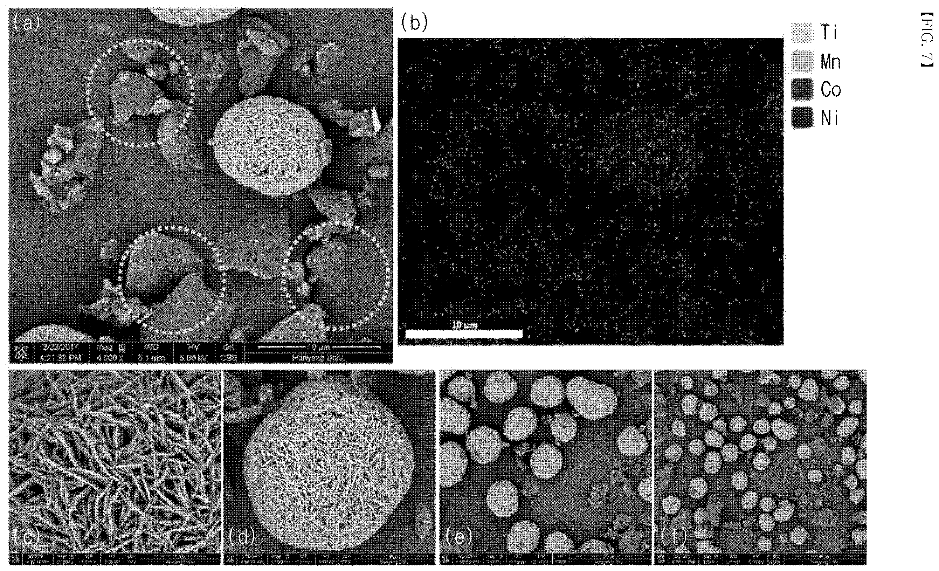

FIG. 3 is a view illustrating EDS mapping data of a cathode active material precursor according to Example 1-2 of the present invention, FIG. 4 is a view illustrating EDS mapping data of a cathode active material precursor according to Comparative Example 2 of the present invention, FIG. 5 is a photographic view illustrating an SEM photograph of the cathode active material precursor according to Example 1-2 of the present invention, FIG. 6 is a photographic view illustrating an SEM photograph of the cathode active material precursor according to Comparative Example 2 of the present invention, and FIG. 7 is a photographic view illustrating EDS mapping data and SEM photographs of the cathode active material precursor according to Comparative Example 2 of the present invention.

Referring to FIGS. 3 to 7, the EDS mapping data of the cathode active material precursors according to Example 1-2 and Comparative Example 2 was observed, and the SEM pictures were taken. FIG. 7(b) shows the EDS mapping data of FIG. 7(a).

As shown in FIGS. 3 to 7, according to Example 1-2, it can be observed that a large amount of TiO₂ which is the addition metal source is present on the surface of the cathode active material precursor (the prepared metal composite hydroxide of Ni_{0.90}Co_{0.05}Mn_{0.05}(OH)₂). Meanwhile, according to Comparative Example 2, it can be observed that a large amount of TiO₂ which is the addition metal source is present in on a surface of LiOH, rather than on the surface of the cathode active material precursor (the prepared metal composite hydroxide of Ni_{0.90}Co_{0.05}Mn_{0.05}(OH)₂). In particular, as can be found in FIGS. 7(a) and 7(b), it can be observed that a large amount of TiO₂ is present in a region where LiOH is present (a region indicated by a yellow dotted line).

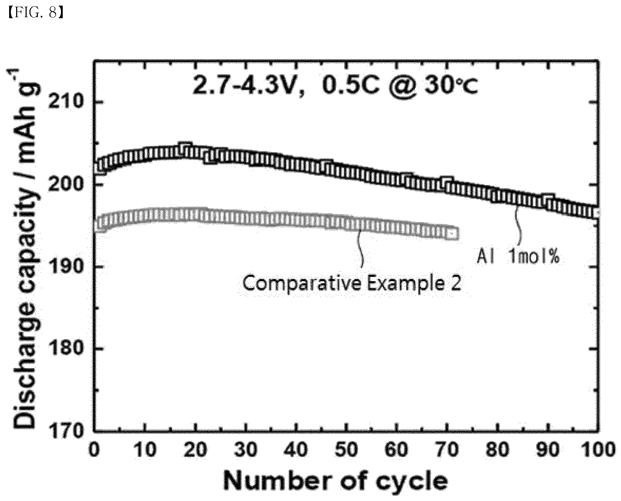

FIG. 8 is a graph obtained by measuring lifespan characteristics of lithium secondary batteries including the cathode active materials according to Example 1-2 and Comparative Example 2 of the present invention.

Referring to FIG. 8, the cathode active materials according to Example 1-2 and Comparative Example 2 were used to prepare a half cell, and a discharge capacity according to the number of charging and discharging cycles was measured under the condition of cut-off 2.7 V to 4.3 V, 0.5 C, and 30 °C.

As shown in FIG. 8, in the case of including the cathode active material according to Example 1-2, it can be observed that the discharge capacity and lifespan characteristics are remarkably excellent as compared with the case of including the cathode active material according to Comparative Example 2.

In conclusion, compared to a case of mixing and baking the cathode active material precursor, the addition metal source, and the lithium salt at once, mixing the cathode active material precursor with the addition metal source, and mixing and baking a resulting mixture with the lithium salt as in the embodiment of the present invention are an efficient way to uniformly perform the doping with the addition metal. Accordingly, it can be observed that capacity characteristics and the lifespan characteristics of the lithium secondary battery are improved.

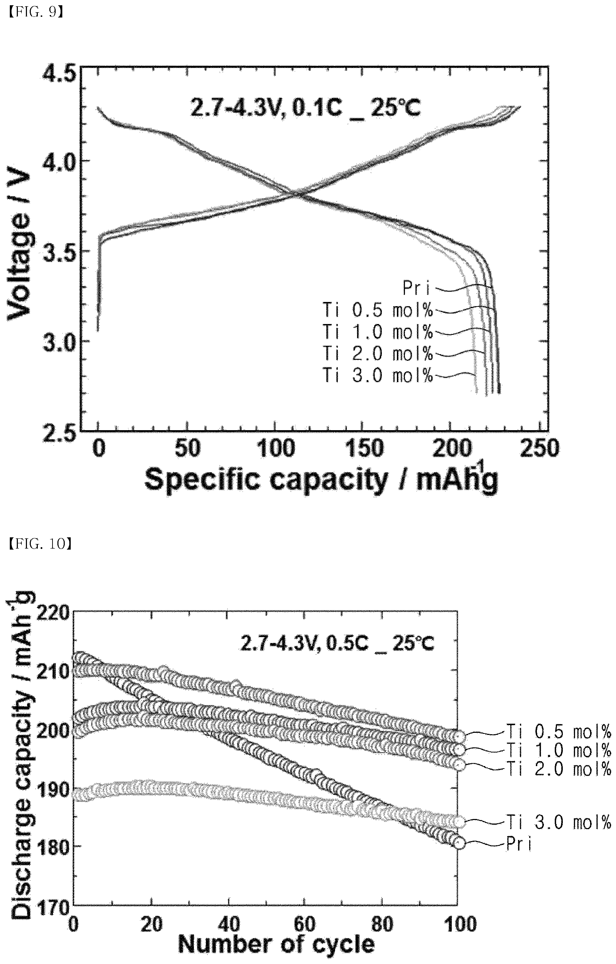

FIG. 9 is a graph obtained by measuring capacity characteristics of lithium secondary batteries including cathode active materials according to Examples 1-1 to 1-4 and Comparative Example 1 of the present invention, and FIG. 10 is a graph obtained by measuring lifespan characteristics of the lithium secondary batteries including the cathode active materials according to Examples 1-1 to 1-4 and Comparative Example 1 of the present invention.

Referring to FIGS. 9 and 10, the cathode active materials according to Comparative Example 1 and Examples 1-1 to 1-4 were used to prepare a half cell, a discharge capacity was measured under the condition of cut-off 2.7 V to 4.3 V, 0.1 C, and 25 °C, and a discharge capacity according to the number of the charging and discharging cycles was measured under the condition of cut-off 2.7 V to 4.3 V, 0.5 C, and 25 °C. Measurement results are shown in FIG. 9, FIG. 10, and [Table 2] below.

**[Table 2]**

| Classification | 0.1C, 1st Dis-capa | 1st Efficiency | 0.2C Capacity | 0.2/0.1C | 0.5C Capacity | 0.5C/0.1C | cycle | Cycle retention | L/L (mg/cm²) |
|---|---|---|---|---|---|---|---|---|---|
| Comparative Example 1 | 227.2 | 95.0% | 221.6 | 97.5% | 212.1 | 93.3% | 100 | 85.2% | 3.90 |
| Example 1-1 | 227.7 | 95.3% | 221.0 | 97.0% | 209.8 | 92.1% | 100 | 94.7% | 3.30 |
| Example 1-2 | 222.1 | 94.5% | 214.5 | 96.6% | 202.0 | 90.9% | 100 | 97.3% | 3.83 |
| Example 1-3 | 220.7 | 94.0% | 212.8 | 96.4% | 199.6 | 90.5% | 100 | 97.2% | 3.78 |
| Example 1-4 | 214.4 | 93.2% | 204.2 | 95.2% | 189.0 | 88.1% | 100 | 97.5% | 4.25 |

As can be found in FIG. 9, FIG. 10, and [Table 2], compared to the lithium secondary battery manufactured by using the cathode active material according to Comparative Example 1, it can be observed that the discharge capacity and the lifespan characteristics of the secondary battery manufactured by using the cathode active materials according to Examples 1-1 to 1-3 are remarkably excellent.

In particular, when the doping is performed with 3.0 mol% of Ti which is the addition metal according to Example 1-4, it can be observed that the lifespan characteristics are significantly reduced as compared with the cases where the doping is performed with 0.5 mol% to 2.0 mol% of Ti which is the addition metal according to Examples 1-1 to 1-3. In other words, it can be observed that controlling the concentration of Ti to less than 3.0 mol% while doping the cathode active material including high-concentration nickel with Ti which is the addition metal is an efficient way to improve the lifespan characteristics and the capacity characteristics.

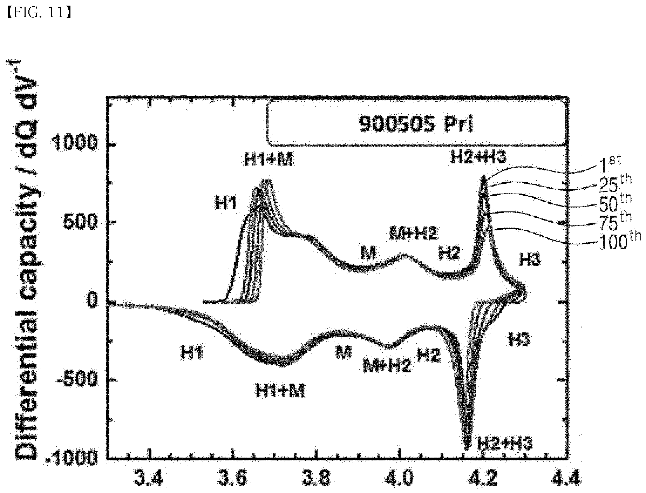

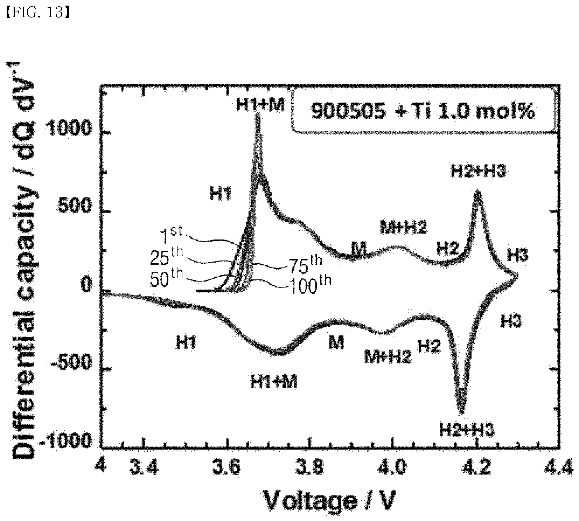

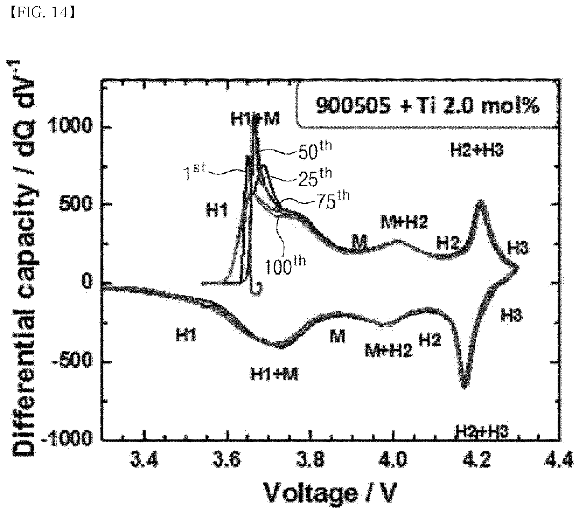

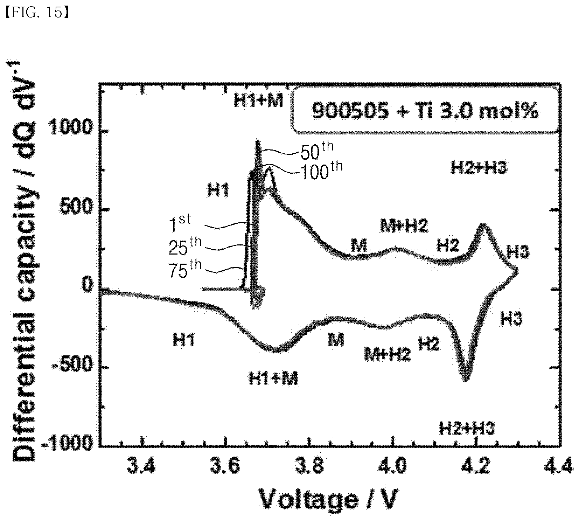

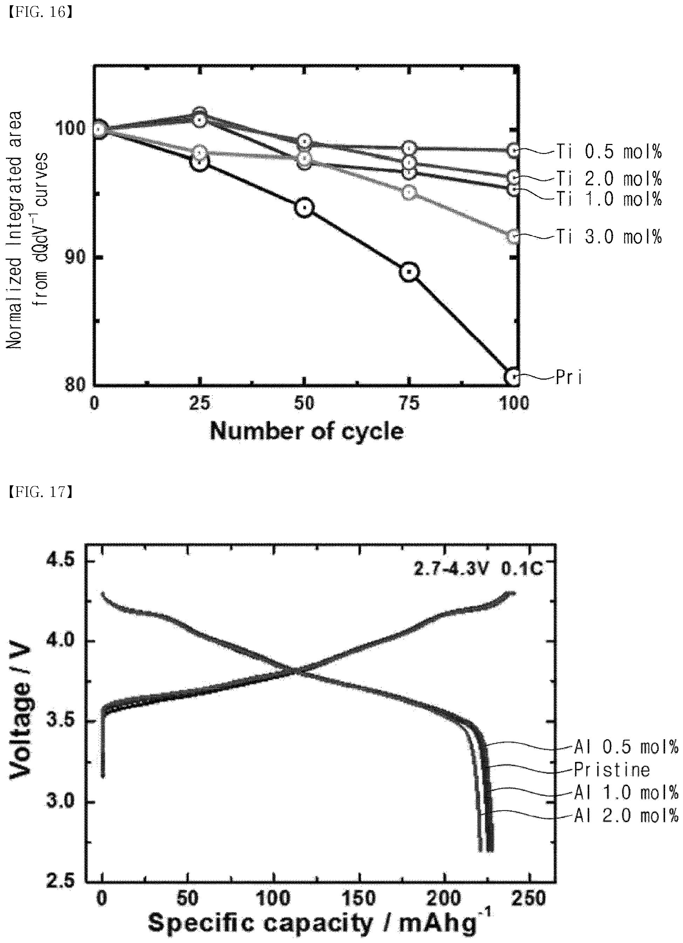

FIGS. 11 to 15 are graphs obtained by measuring differential capacities of the lithium secondary batteries including the cathode active materials according to Comparative Example 1 and Examples 1-1 to 1-4 of the present invention, and FIG. 16 is a graph for describing capacity changes according to the number of charging and discharging cycles of the lithium secondary batteries including the cathode active materials according to Comparative Example 1 and Examples 1-1 to 1-4 of the present invention.

Referring to FIGS. 11 to 16, as described above, the cathode active materials according to Comparative Example 1 and Examples 1-1 to 1-4 were used to prepare a half cell, and a differential capacity according to the number of the charging and discharging cycles was measured within the range of 2.7 V to 4.3 V, at an evaluation temperature of 30 °C, and a charging condition of 0.5 C. In addition, as shown in FIG. 16, in graphs for measuring the differential capacity according to FIGS. 11 to 15, an integrated area at 4.1 V to 4.3 V according to the number of the charging and discharging cycles was normalized.

As can be found in FIGS. 11 to 15, as the charging and discharging proceeds, it can be observed that the cathode active materials according to Examples 1-1 to 1-4 and Comparative Example 1 sequentially have H1 phase, H1+M phase, M phase, M+H2 phase, H2 phase, H2+H3 phase, H3 phase, H2+H3 phase, M+H2 phase, M phase, H1+M phase, and H1 phase. In FIGS. 11 to 15, H1 phase represents a crystal structure in which the cathode active materials according to Examples and Comparative Example have an intrinsic lattice constant in the c-axis direction, H2 phase represents a crystal structure in which the cathode active materials according to Examples and Comparative Example have a lattice constant longer than the intrinsic lattice constant in the c-axis direction, H3 phase represents a crystal structure in which the cathode active materials according to Examples and Comparative Example have a lattice constant shorter than the intrinsic lattice constant in the c-axis direction, and M phase represents a monoclinic crystal structure.

In addition, when the doping is performed with 3.0 mol% of Ti which is the addition metal, as described above with reference to FIGS. 9 and 10, a peak value is small in the range of 4.1 V to 4.3 V so that the integrated area is narrow in the range of 4.1 V to 4.3 V as compared with the case where the doping is performed with less than 3.0 mol% of Ti. Accordingly, it can be observed again that the capacity is small.

In addition, when the doping is not performed with Ti which is the addition metal, as shown in FIG. 11, it can be observed that peak values of H2 and H3 phases are rapidly decreased as the number of the charging and discharging cycles increases. In other words, the integrated area is rapidly reduced in the range of 4.1 V to 4.3 V, and as described above with reference to FIGS. 9 and 10, in the case of Comparative Example 1, it can be observed again that the capacity is rapidly decreased according to the number of the charging and discharging cycles.

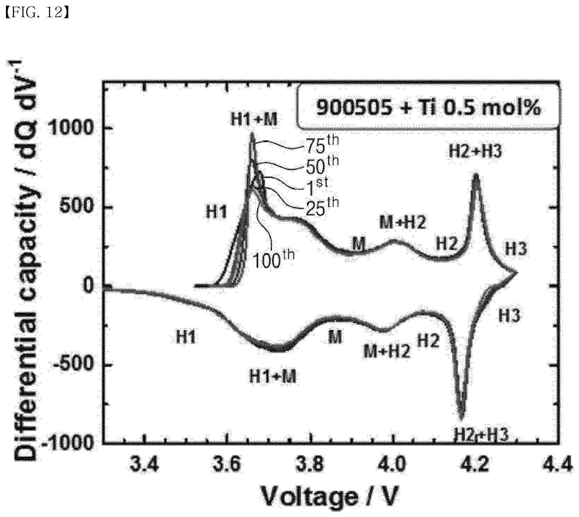

Meanwhile, according to Examples 1-1 to 1-3, as shown in FIGS. 12 to 14, it can be observed that the peak values of H2 and H3 phases are maintained substantially constant as the number of the charging and discharging cycles increases. That is, it can be observed that an amount of a change in a production ratio of H2 and H3 phases is significantly reduced by Ti which is the addition metal according to the number of the charging and discharging cycles. In other words, the integrated area remains substantially constant in the range of 4.1 V to 4.3 V, and as described above with reference to FIGS. 9 and 10, according to Examples, a decrease in the capacity according to the number of the charging and discharging cycles may be minimized. In detail, as shown in FIG. 16, in the case of Examples 1-1 to 1-4 of the present invention, when the number of the charging and discharging cycles is 100, it can be observed that the amount of reduction of the integrated area in the range of 4.1 V to 4.3 V is 10 % or less.

### Preparation of Cathode Active Materials According to Examples 2-1 to 2-3

The metal composite hydroxide of Ni_{0.90}Co_{0.05}Mn_{0.05}(OH)₂ was prepared according to Example 1-1, and the metal composite hydroxide of Ni_{0.90}Co_{0.05}Mn_{0.05}(OH)₂ was mixed with Al(OH)₃ by the ball mill at 100 rpm for 7 hours to prepare a cathode active material precursor according to Example 2-1, which is doped with 0.5 mol% of Al.

In the same conditions and methods as in Example 2-1, cathode active material precursors according to Example 2-2 and Example 2-3, which are respectively doped with 1.0 mol% and 2.0 mol% of Al, were prepared.

After the cathode active material precursors according to Examples 2-1 to 2-3 and the lithium hydroxide (LiOH.H₂O) are mixed with each other by the ball mill at the molar ratio of 1:1 at 200 rpm for 1 hour, the preliminary baking was performed by heating at the heating rate of 2 °C/min and maintaining at 450 °C for 5 hours. Subsequently, baking was performed at 750 °C for 10 hours, so that cathode active material powders according to Examples 2-1 to 2-3 were prepared as shown in [Table 3] below.

**[Table 3]**

| Classification | Chemical Formula |
|---|---|
| Example 2-1 | Li [(Ni_{0.90}Co_{0.05}Mn_{0.05-})_{0.995}Al_{0.005}]O₂ |
| Example 2-2 | Li[(Ni_{0.90}Co_{0.05}Mn_{0.05-})_{0.99}Al_{0.01}]O₂ |
| Example 2-3 | Li[(Ni_{0.90}Co_{0.05}Mn_{0.05-}) _{0.98}Al_{0.02}]O₂ |

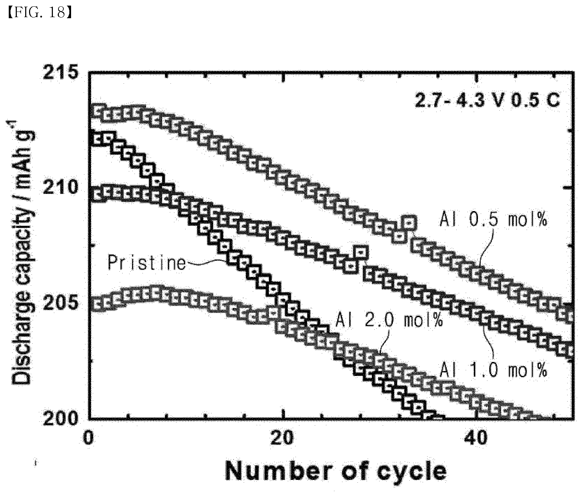

FIG. 17 is a graph obtained by measuring capacity characteristics of lithium secondary batteries including cathode active materials according to Examples 2-1 to 2-3 and Comparative Example 1 of the present invention, and FIG. 18 is a graph obtained by measuring lifespan characteristics of lithium secondary batteries including cathode active materials according to Examples 2-1 to 2-3 and Comparative Example 1 of the present invention.

Referring to FIGS. 17 and 18, the cathode active materials according to Comparative Example 1 and Examples 2-1 to 2-3 were used to prepare a half cell, the discharge capacity was measured under the condition of cut-off 2.7 V to 4.3 V, 0.1 C, and 25 °C, and the discharge capacity according to the number of the charging and discharging cycles was measured under the condition of cut-off 2.7 V to 4.3 V, 0.5 C, and 25 °C. Measurement results are shown in FIG. 17, FIG. 18, and [Table 4] below.

**[Table 4]**

| Classification | 0.1C, 1st Dis-capa | 1st Efficiency | 0.2C Capacity | 0.2/0.1C | 0.5C Capacity | 0.5C/0.1C | cycle | Cycle retention | L/L (mg/cm²) |
|---|---|---|---|---|---|---|---|---|---|
| Comparative Example 1 | 227.2 | 95.0% | 221.6 | 97.5% | 212.1 | 93.3% | 100 | 85.2% | 3.90 |
| Example 2-1 | 227.9 | 95.0% | 222.6 | 97.7% | 213.3 | 93.6% | 100 | 91.1% | 3.27 |
| Example 2-2 | 225.5 | 95.1% | 219.9 | 97.5% | 209.7 | 93.0% | 100 | 91.7% | 3.90 |
| Example 2-3 | 221.1 | 93.0% | 215.1 | 97.3% | 205.0 | 92.7% | 100 | 92.1% | 4.11 |

As can be found in FIG. 17, FIG. 18, and [Table 4], compared to the lithium secondary battery manufactured by using the cathode active material according to Comparative Example 1, it can be observed that the discharge capacity and the lifespan characteristics of the secondary battery manufactured by using the cathode active materials according to Examples 2-1 to 2-3 are remarkably excellent.

In particular, when the doping is performed with 2.0 mol% of Al which is the addition metal according to Example 2-3, it can be observed that the lifespan characteristics are significantly reduced as compared with the cases where the doping is performed with 0.5 mol% to 1.0 mol% of Al which is the addition metal according to Examples 2-1 and 2-2. In other words, it can be observed that controlling the concentration of Al to less than 2.0 mol% while doping the cathode active material including high-concentration nickel with Al which is the addition metal is an efficient way to improve the lifespan characteristics and the capacity characteristics.

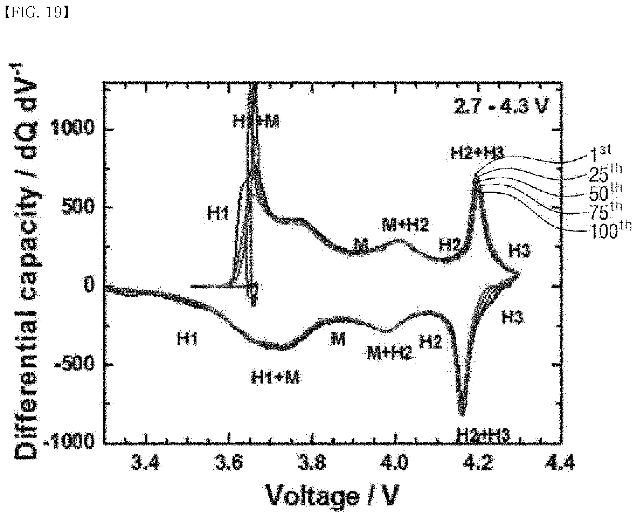

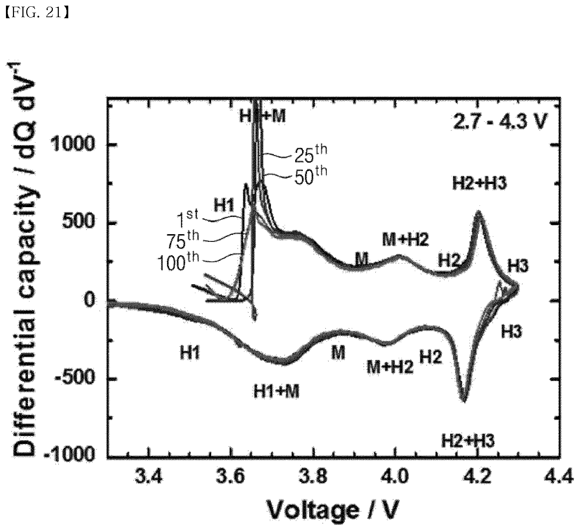

FIGS. 19 to 21 are graphs obtained by measuring differential capacities of the lithium secondary batteries including the cathode active materials according to Examples 2-1 to 2-3 of the present invention.

Referring to FIGS. 11 and 19 to 21, as described above, the cathode active materials according to Comparative Example 1 and Examples 2-1 to 2-3 were used to prepare a half cell, and the differential capacity according to the number of the charging and discharging cycles was measured within the range of 2.7 V to 4.3 V, at the evaluation temperature of 30 °C, and the charging condition of 0.5 C.

As can be found in FIGS. 11 and 19 to 21, as the charging and discharging proceeds, it can be observed that the cathode active materials according to Examples 2-1 to 2-3 and Comparative Example 1 sequentially have H1 phase, H1+M phase, M phase, M+H2 phase, H2 phase, H2+H3 phase, H3 phase, H2+H3 phase, M+H2 phase, M phase, H1+M phase, and H1 phase.

In addition, when the doping is performed with 2.0 mol% of Al which is the addition metal, as described above with reference to FIGS. 17 and 18, the peak value is small in the range of 4.1 V to 4.3 V so that the integrated area is narrow in the range of 4.1 V to 4.3 V as compared with the case where the doping is performed with less than 2.0 mol% of Al. Accordingly, it can be observed again that the capacity is small.

In addition, when the doping is not performed with Al which is the addition metal, as described with reference to FIG. 11, it can be observed that the peak values of H2 and H3 phases are rapidly decreased as the number of the charging and discharging cycles increases.

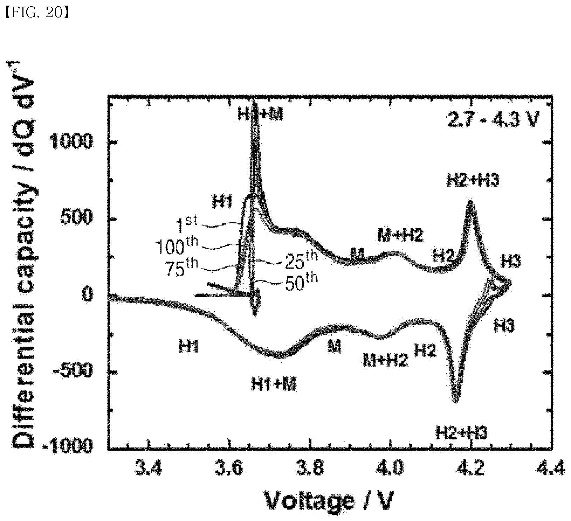

Meanwhile, according to Examples 2-1 and 2-2, as shown in FIGS. 19 and 20, it can be observed that the peak values of H2 and H3 phases are maintained substantially constant as the number of the charging and discharging cycles increases. That is, it can be observed that the amount of the change in the production ratio of H2 and H3 phases is significantly reduced by Al which is the addition metal according to the number of the charging and discharging cycles. In other words, the integrated area remains substantially constant in the range of 4.1 V to 4.3 V, and as described above with reference to FIGS. 17 and 18, according to Examples, the decrease in the capacity according to the number of the charging and discharging cycles may be minimized.

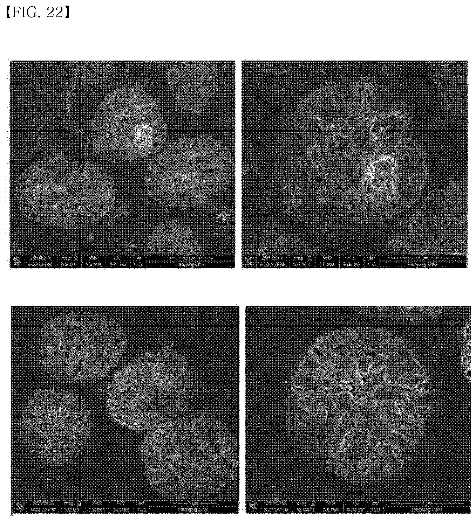

FIGS. 22 to 24 are photographic views illustrating SEM photographs showing sections of the cathode active materials according to Example 2-2 and Comparative Example 1 of the present invention.

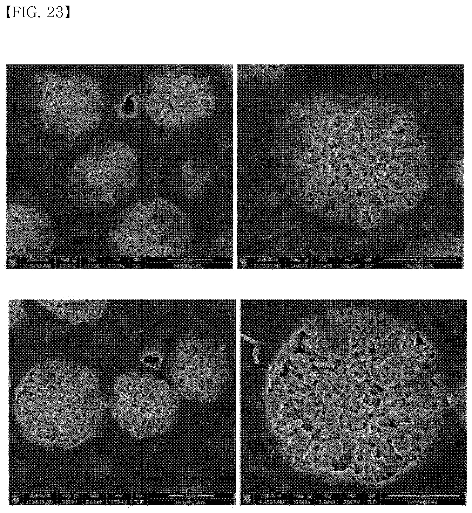

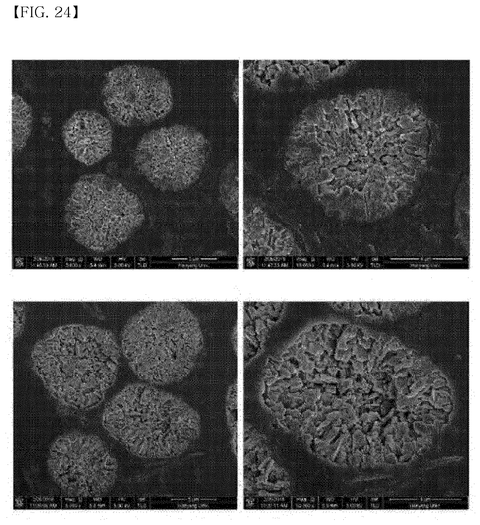

Referring to FIGS. 22 to 24, FIGS. 22(a) and 22(b) are photographic views illustrating SEM photographs of the cathode active materials according to Example 2-2 and Comparative Example 1, which are taken after preparing coin cells by using the cathode active materials according to Example 2-2 and Comparative Example 1 and charging the coin cells to 4.3 V, respectively. FIGS. 23(a) and 23(b) are photographic views illustrating SEM photographs of the cathode active materials according to Example 2-2 and Comparative Example 1, which are taken after preparing the coin cells by using the cathode active materials according to Example 2-2 and Comparative Example 1, charging the coin cells to 4.3 V, and storing the coin cells in an electrolyte solution at 60 °C for 5 days, respectively. FIGS. 24(a) and 24(b) are photographic views illustrating SEM photographs of the cathode active materials according to Example 2-2 and Comparative Example 1, which are taken after preparing the coin cells by using the cathode active materials according to Example 2-2 and Comparative Example 1, charging the coin cells to 4.3 V, and storing the coin cells in the electrolyte solution at 60 °C for 10 days, respectively.

As can be found in FIGS. 22 to 24, it can be observed that a particle structure of the cathode active material according to Comparative Example 1 is easily collapsed, while a particle structure of the cathode active material according to Example 2-2 does not collapse even under a high-temperature condition.

In conclusion, according to the embodiment of the present invention, it can be observed that doping the cathode active material with the addition metal is an efficient way to improve structural, mechanical, and chemical stability of the cathode active material particles.

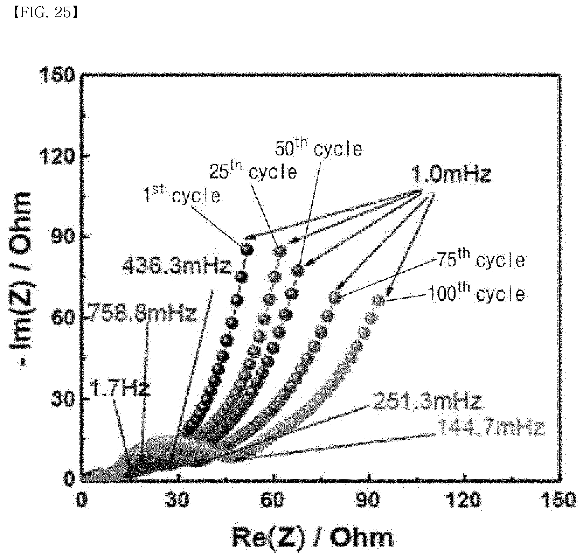

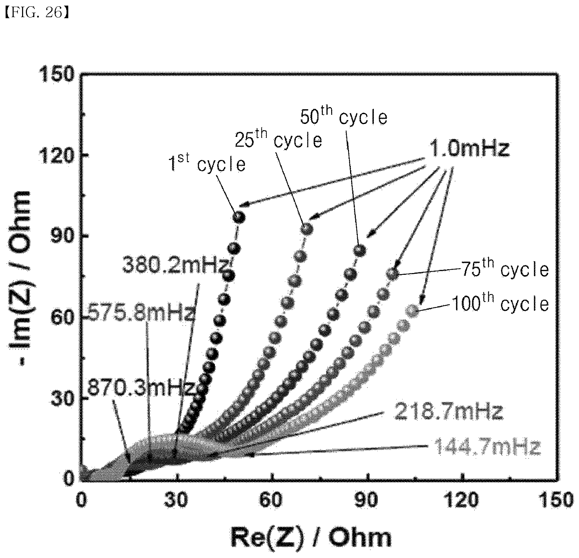

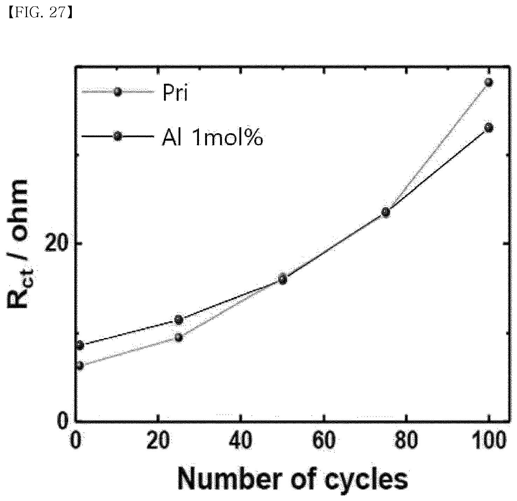

FIG. 25 is a graph obtained by measuring a surface resistance of the cathode active material according to Example 2-2 of the present invention, FIG. 26 is a graph obtained by measuring a surface resistance of the cathode active material according to Comparative Example 1 of the present invention, and FIG. 27 is a graph for comparing R_{ct} values of the cathode active materials according to Example 2-2 and Comparative Example 1 of the present invention.

Referring to FIGS. 25 to 27, surface resistances of the cathode active materials according to Example 2-2 and Comparative Example 1 were measured by an EIS analysis scheme. When the number of the charging and discharging cycles is 1 to 50, the surface resistance of the cathode active material according to Comparative Example 1 was measured to be slightly lower than the surface resistance of the cathode active material according to Example 2-2. However, when the number of the charging and discharging cycles is 50 or more, it can be observed that the surface resistance of the cathode active material according to Example 2-2 is lower than the surface resistance of the cathode active material according to Comparative Example 1, and a difference between the surface resistances is significantly increased.

In conclusion, according to the embodiment of the present invention, it can be observed that doping the cathode active material with the addition metal is an efficient way to improve the lifespan characteristics and the capacity characteristics by reducing the surface resistance of the cathode active material particles according to the number of the charging and discharging cycles.

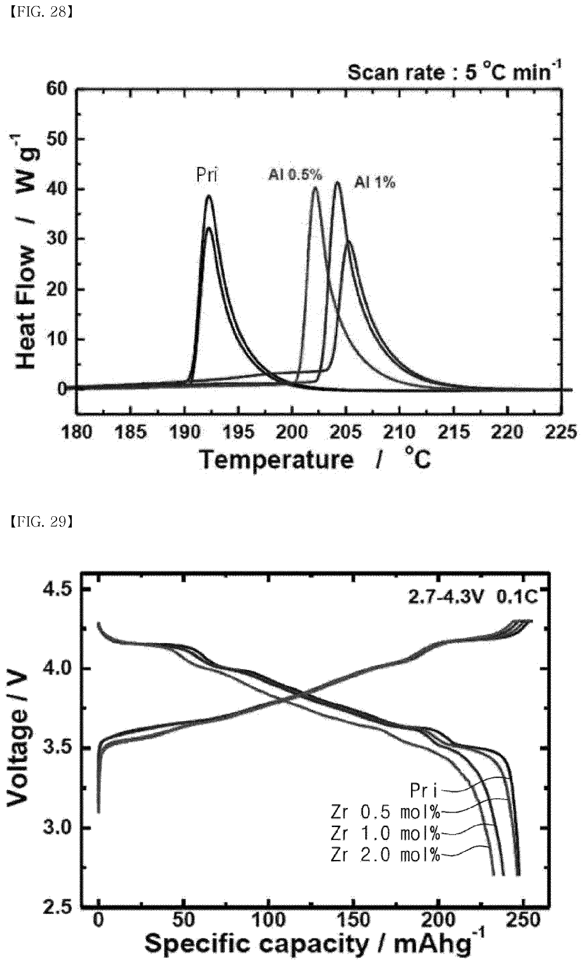

FIG. 28 is a graph obtained by measuring thermal stability of the cathode active materials according to Example 2-1, Example 2-2, and Comparative Example 1 of the present invention.

Referring to FIG. 28, thermal stability of the cathode active materials according to Example 2-1, Example 2-2, and Comparative Example 1 was measured by a DSC scheme (scan rate of 5 °C/min, and condition of cut-off 4.3 V).

**[Table 5]**

| Classification | Peak temperature (°C) | Enthalpy (J g⁻¹) |
|---|---|---|
| Comparative Example 1 | 192 | 1795 |
| | 191.6 | 1761 |
| Example 2-1 | 202 | 1453 |
| Example 2-2 | 204.6 | 1319 |
| | 204 | 1409 |

As shown in FIG. 28 and [Table 5], it can be observed that a temperature at which the peak value occurs in the cathode active materials according to Examples 2-1 and 2-2 is significantly higher than a temperature at which the peak value occurs in the cathode active material according to Comparative Example 1.

In conclusion, according to the embodiment of the present invention, it can be observed that doping the cathode active material with the addition metal is an efficient way to improve the thermal stability of the cathode active material particles.

### Preparation of Cathode Active Materials According to Examples 3-1 to 3-3

In this case, 4.5 liters of distilled water was put into the coprecipitation reactor (capacity of 17 L, and rotary motor output of at least 750 W), the N₂ gas was supplied to the reactor at the rate of 2.5 liters/minute, and the stirring was performed at 350 rpm while maintaining the temperature of the reactor at 45 °C. The nickel sulfate aqueous solution having the concentration of 2 M at the rate of 0.187 liters/hour, the sodium hydroxide aqueous solution having the concentration of 4M at the rate of 0.187 liters/hour, and the ammonia aqueous solution having the concentration of 10.5 M at the rate of 0.043 liters/hour were continuously added to the reactor for 15 hours to 35 hours to prepare a metal composite hydroxide of Ni(OH)₂.

The prepared metal composite hydroxide of Ni(OH)₂ was filtered, washed with water, and dried in the vacuum dryer at 110 °C for 12 hours. ZrO₂ was prepared as an addition metal source including an addition metal of Zr.

According to Example 3-1, the metal composite hydroxide of Ni(OH)₂ and ZrO₂ were mixed with each other by the ball mill at 100 rpm for 7 hours to prepare a cathode active material precursor according to Example 3-1, which is doped with 0.5 mol% of Zr.

In the same conditions and methods as in Example 3-1, cathode active material precursors according to Example 3-2 and Example 3-3, which are respectively doped with 1.0 mol% and 2.0 mol% of Zr, were prepared.

After the cathode active material precursors according to Examples 3-1 to 3-3 and the lithium hydroxide (LiOH.H₂O) are mixed with each other by the ball mill at the molar ratio of 1:1 at 200 rpm for 1 hour, the preliminary baking was performed by heating at the heating rate of 2 °C/min and maintaining at 450 °C for 5 hours. Subsequently, baking was performed at 650 to 670 °C for 10 hours, so that cathode active material powders according to Examples 3-1 to 3-3 were prepared.

### Preparation of Cathode Active Material According to Example 3-4

The metal composite hydroxide of Ni_{0.90}Co_{0.05}Mn_{0.05}(OH)₂ was prepared according to Example 1-1, and the metal composite hydroxide of Ni_{0.90}Co_{0.05}Mn_{0.05}(OH)₂ was mixed with ZrO₂ by the ball mill at 100 rpm for 7 hours to prepare a cathode active material precursor according to Example 3-4, which is doped with 0.5 mol% of Zr.

Thereafter, in the same conditions and methods as in Examples 3-1 to 3-3, a cathode active material precursor according to Example 3-4 was mixed and baked with the lithium salt to prepare cathode active material powder according to Example 3-4.

**[Table 6]**

| Classification | Chemical Formula |
|---|---|
| Example 3-1 | LiNi_{0.995}Zr_{0.005}O₂ |
| Example 3-2 | LiNi_{0.99}Zr_{0.01}O₂ |
| Example 3-3 | LiNi_{0.98}Zr_{0.02}O₂ |
| Example 3-4 | Li [ (Ni_{0.90}Co_{0.05}Mn_{0.05-})_{0.995}Zr_{0.005}]O₂ |

### Preparation of Cathode Active Material According to Comparative Example 3

In the method for manufacturing the cathode active material according to Examples 3-1 to 3-3, the ball mill process with ZrO₂ which is the addition metal source was omitted to prepare a cathode active material of LiNiO₂.

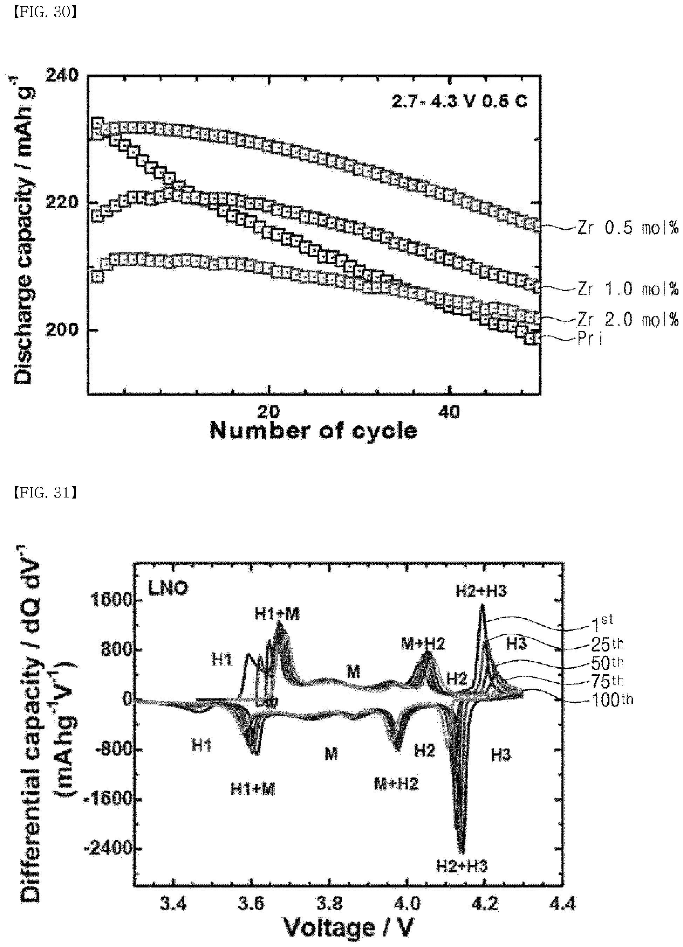

FIG. 29 is a graph obtained by measuring capacity characteristics of lithium secondary batteries including cathode active materials according to Examples 3-1 to 3-3 and Comparative Example 3 of the present invention, and FIG. 30 is a graph obtained by measuring lifespan characteristics of lithium secondary batteries including cathode active materials according to Examples 3-1 to 3-3 and Comparative Example 3 of the present invention.

Referring to FIGS. 29 and 30, the cathode active materials according to Comparative Example 3 and Examples 3-1 to 3-3 were used to prepare a half cell, the discharge capacity was measured under the condition of cut-off 2.7 V to 4.3 V, 0.1 C, and 25 °C, and the discharge capacity according to the number of the charging and discharging cycles was measured under the condition of cut-off 2.7 V to 4.3 V, 0.5 C, and 25 °C. Measurement results are shown in FIG. 29, FIG. 30, and [Table 7] below.

**[Table 7]**

| Classification | 0.1C, 1st Dis-capa | 1st Efficiency | 0.2C Capacity | 0.2/0.1C | 0.5C Capacity | 0.5C/0.1C | cycle | Cycle retention |
|---|---|---|---|---|---|---|---|---|
| Comparative Example 3 | 247.5 | 96.8% | 242.3 | 97.9% | 232.5 | 93.9% | 100 | 73.7% |
| Example 3-1 | 246.5 | 97.0% | 241.1 | 97.8% | 230.9 | 93.7% | 100 | 81.0% |
| Example 3-2 | 238.4 | 95.0% | 231.2 | 97.0% | 217.9 | 91.4% | 100 | 82.9% |
| Example 3-3 | 232.6 | 93.8% | 222.6 | 95.7% | 208.5 | 89.6% | 100 | 86.0% |
| Example 3-4 | 223.9 | 94.6% | 217.4 | 97.1% | 207.1 | 92.5% | 100 | 91.7% |

As can be found in FIG. 29, FIG. 30, and [Table 7], compared to the lithium secondary battery manufactured by using the cathode active material according to Comparative Example 3, it can be observed that the discharge capacity and the lifespan characteristics of the secondary battery manufactured by using the cathode active materials according to Examples 3-1 and 3-2 are remarkably excellent.

In particular, when the doping is performed with 2.0 mol% of Zr which is the addition metal according to Example 3-3, it can be observed that the lifespan characteristics are significantly reduced as compared with the cases where the doping is performed with 0.5 mol% to 1.0 mol% of Zr which is the addition metal according to Examples 3-1 and 3-2. In other words, it can be observed that controlling the concentration of Zr to less than 2.0 mol% while doping the cathode active material including high-concentration nickel with Zr which is the addition metal is an efficient way to improve the lifespan characteristics and the capacity characteristics.

In addition, even in the case where the doping is performed with the same concentration of the addition metal as in Example 3-1 and Example 3-4, it can be observed that the decrease in the capacity according to the number of the charging and discharging cycles is greater when the nickel content is high. In other words, when the nickel content is increased for a high capacity, there may be a problem that the capacity according to the number of the charging and discharging cycles decreases. In this case, it can be observed that performing the doping with the addition metal as in the embodiment of the present invention is an efficient way to solve the problem.

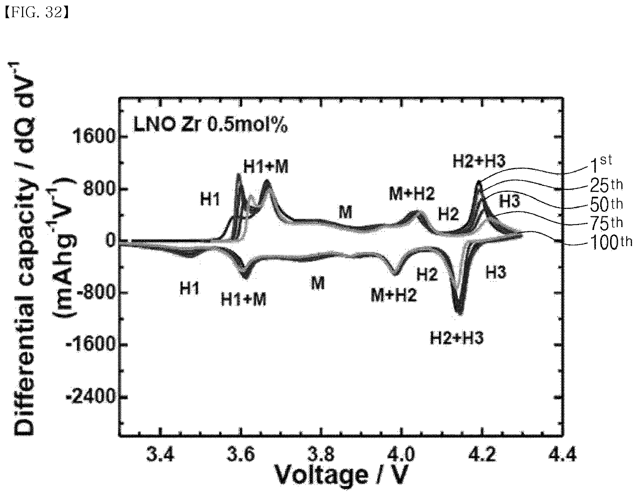

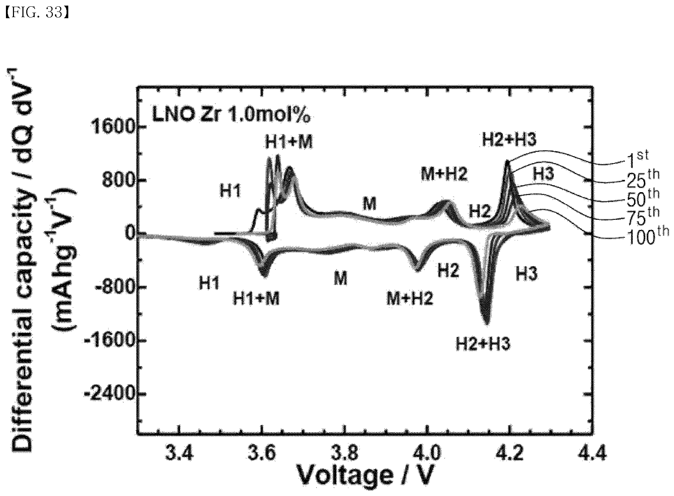

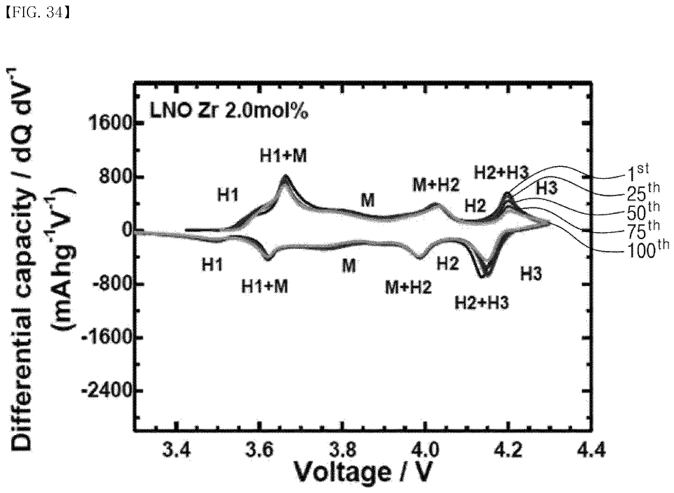

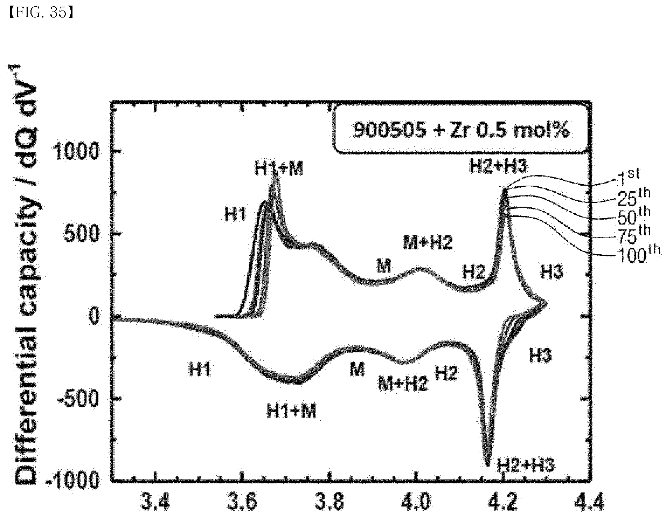

FIGS. 31 to 35 are graphs obtained by measuring differential capacities of lithium secondary batteries including cathode active materials according to Comparative Example 3 and Examples 3-1 to 3-4 of the present invention.

Referring to FIGS. 31 to 35, as described above, the cathode active materials according to Comparative Example 3 and Examples 3-1 to 3-4 were used to prepare a half cell, and the differential capacity according to the number of the charging and discharging cycles was measured within the range of 2.7 V to 4.3 V, at the evaluation temperature of 30 °C, and the charging condition of 0.5 C.

As can be found in FIGS. 31 to 35, as the charging and discharging proceeds, it can be observed that the cathode active materials according to Examples 3-1 to 3-4 and Comparative Example 3 sequentially have H1 phase, H1+M phase, M phase, M+H2 phase, H2 phase, H2+H3 phase, H3 phase, H2+H3 phase, M+H2 phase, M phase, H1+M phase, and H1 phase.

In addition, when the doping is not performed with Zr which is the addition metal, it can be observed that the peak values of H2 and H3 phases are rapidly decreased as the number of the charging and discharging cycles increases.

Meanwhile, according to Examples 3-1, 3-2, and 3-4, as shown in FIGS. 29 and 30, it can be observed that an amount of a change in the peak values of H2 and H3 phases is decreased as the number of the charging and discharging cycles increases in comparison with Comparative Example 3. That is, it can be observed that the amount of the change in the production ratio of H2 and H3 phases is reduced by Zr which is the addition metal according to the number of the charging and discharging cycles.

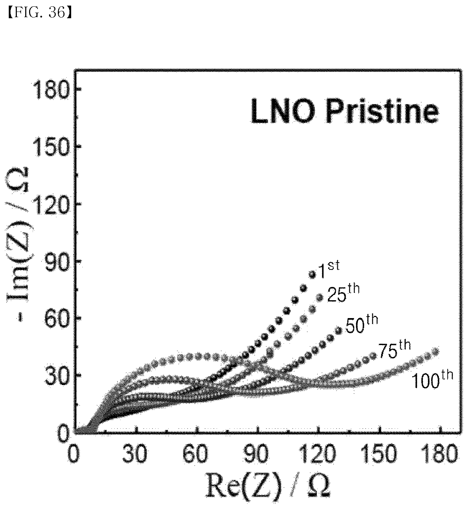

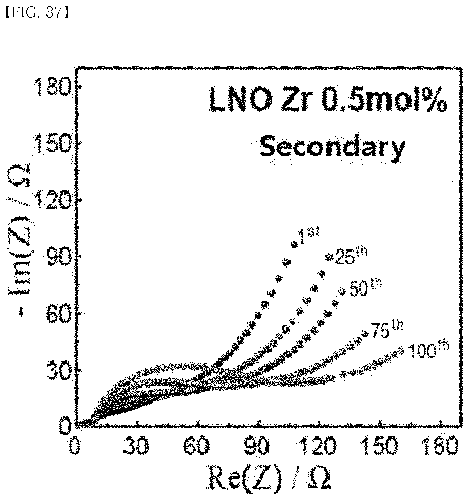

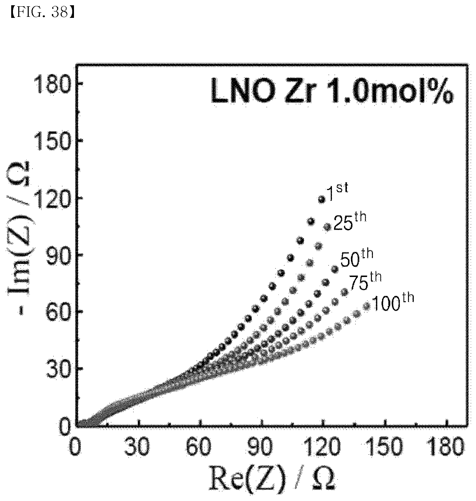

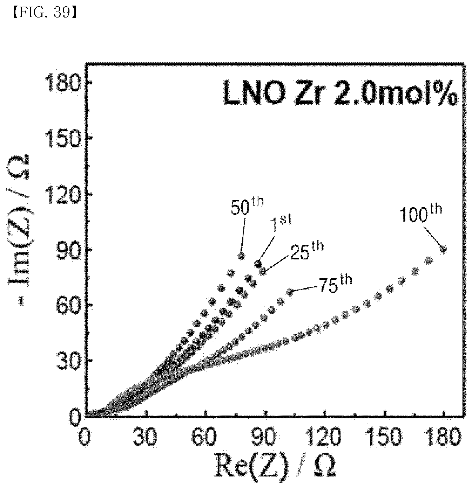

FIGS. 36 to 39 are graphs obtained by measuring surface resistances of the cathode active materials according to Comparative Example 3 and Examples 3-1 to 3-3 of the present invention.

Referring to FIGS. 36 to 39, surface resistances of the cathode active materials according to Examples 3-1 to 3-3 and Comparative Example 3 were measured by the EIS analysis scheme.

**[Table 8]**

| Cycle | R_{ct} (Ω) | | | |
|---|---|---|---|---|
| | Comparative Example 1 | Example 3-1 | Example 3-2 | Example 3-3 |
| 1^{st} | 10.6 | 7.3 | 4.2 | 4.1 |
| 25^{th} | 21.1 | 18.5 | 4.8 | 4.3 |
| 50^{th} | 34.2 | 30.7 | 5.5 | 4.5 |
| 75^{th} | 44.9 | 40.9 | 5.8 | 5.1 |
| 100^{th} | 85.2 | 77.3 | 6.0 | 7.0 |

As can be found in FIGS. 36 to 39 and [Table 8], it can be observed that the surface resistance of the cathode active materials according to Examples 3-1 to 3-3 is significantly smaller than the surface resistance of the cathode active material according to Comparative Example 3. In addition, it can be observed that the difference between the surface resistances is significantly increased as the number of the charging and discharging cycles increases. In conclusion, according to the embodiment of the present invention, it can be observed that doping the cathode active material with the addition metal is an efficient way to improve the lifespan characteristics and the capacity characteristics by reducing the surface resistance of the cathode active material particles according to the number of the charging and discharging cycles.

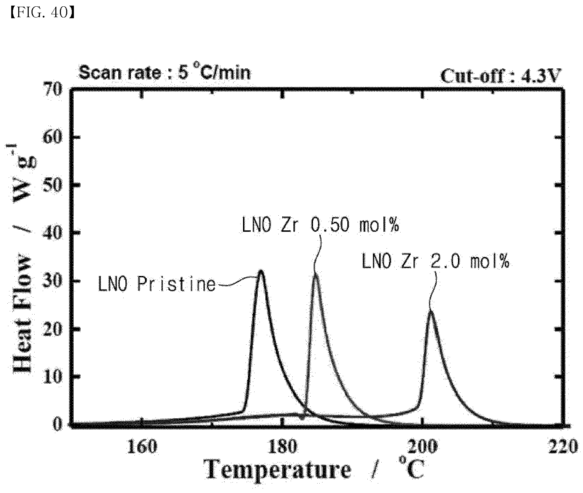

FIG. 40 is a graph obtained by measuring thermal stability of the cathode active materials according to Comparative Example 3, Example 3-1, and Example 3-3 of the present invention.

Referring to FIG. 40, thermal stability of the cathode active materials according to Comparative Example 3, Example 3-1, and Example 3-3 was measured by the DSC scheme (scan rate of 5 °C/min, and condition of cut-off 4.3 V).

**[Table 9]**

| Classification | Onset temperature (°C) | Peak temperature (°C) | Enthalpy (J/g) |
|---|---|---|---|
| Comparative Example 3 | 176.0 | 176.1 | 1860 |
| Example 3-1 | 183.5 | 183.7 | 1645 |
| Example 3-3 | 200.2 | 200.3 | 1182 |

As shown in FIG. 40 and [Table 9], it can be observed that a temperature at which the peak value occurs in the cathode active materials according to Examples 3-1 and 3-3 is significantly higher than a temperature at which the peak value occurs in the cathode active material according to Comparative Example 3.

In conclusion, according to the embodiment of the present invention, it can be observed that doping the cathode active material with the addition metal is an efficient way to improve structural, mechanical, and chemical stability of the cathode active material particles.

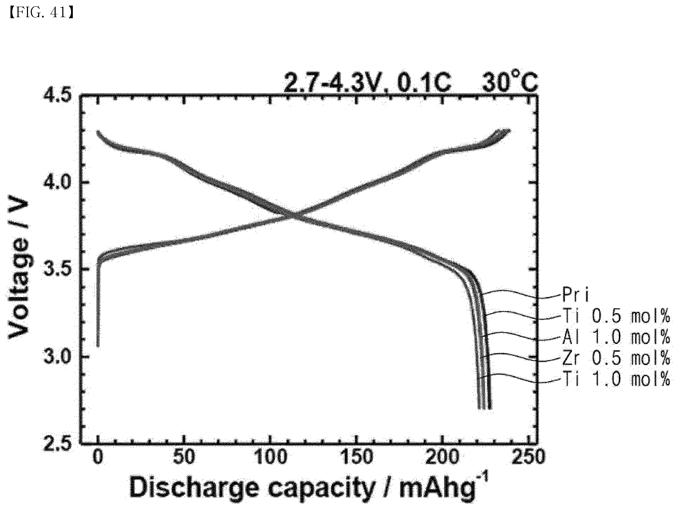

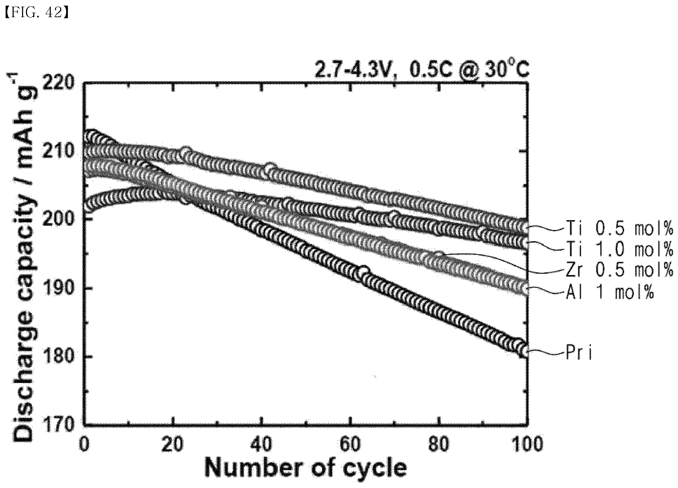

FIG. 41 is a graph obtained by measuring, capacity characteristics of the lithium secondary batteries including the cathode active materials according to Comparative Example 1 and Examples 1-1, 1-2, 2-2, and 3-4 of the present invention, and FIG. 42 is a graph obtained by measuring lifespan characteristics of the lithium secondary batteries including the cathode active materials according to Comparative Example 1 and Examples 1-1, 1-2, 2-2, and 3-4 of the present invention.

Referring to FIGS. 41 and 42, the cathode active materials according to Comparative Example 1 and Examples 1-1, 1-2, 2-2, and 3-4 were used to prepare a half cell, the discharge capacity was measured under the condition of cut-off 2.7 V to 4.3 V, 0.1 C, and 25 °C, and the discharge capacity according to the number of the charging and discharging cycles was measured under the condition of cut-off 2.7 V to 4.3 V, 0.5 C, and 25 °C.

As can be found in FIGS. 41 and 42, compared to the lithium secondary battery manufactured by using the cathode active material according to Comparative Example 1, it can be observed that the discharge capacity and the lifespan characteristics of the secondary battery manufactured by using the cathode active materials according to Examples 1-1, 1-2, 2-2, and 3-4 are remarkably excellent.

In particular, when the addition metal is Ti according to Examples 1-1 and 1-2, it can be observed that a lifespan characteristic improvement effect is remarkably excellent as compared with the cases where the addition metal is Al and Zr according to Example 2-2 and Example 3-4.

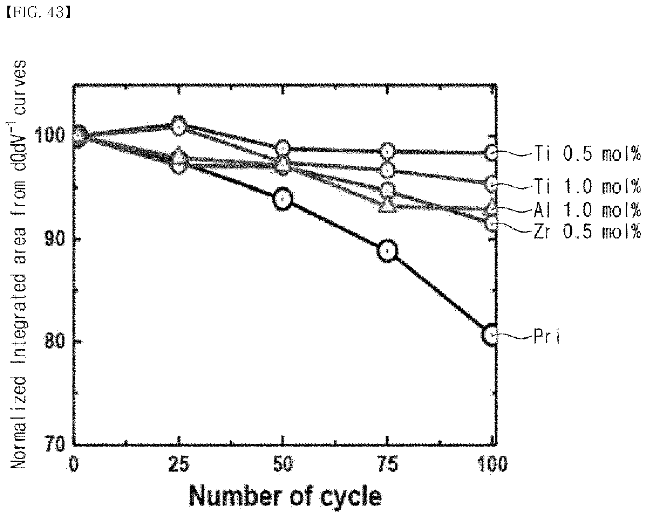

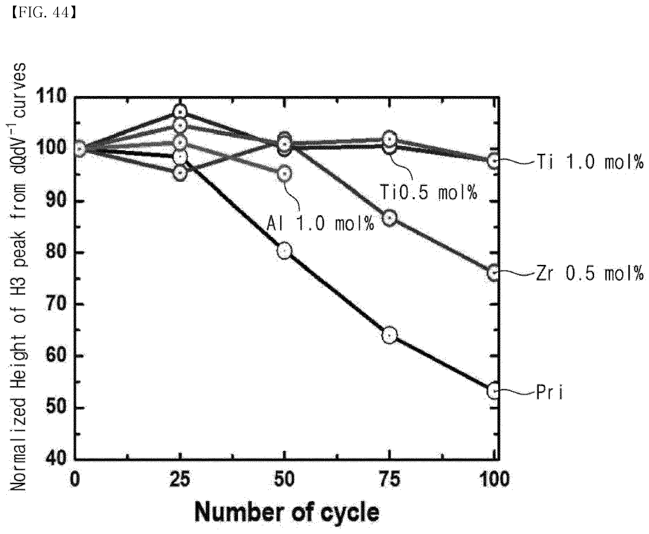

FIGS. 43 and 44 are graphs for describing capacity changes according to the number of charging and discharging cycles of the lithium secondary batteries including the cathode active materials according to Comparative Example 1 and Examples 1-1, 1-2, 2-2, and 3-4 of the present invention.

Referring to FIGS. 43 and 44, the cathode active materials according to Comparative Example 1 and Examples 1-1, 1-2, 2-2, and 3-4 were used to prepare a half cell, and in graphs for measuring the differential capacity of Examples 1-1, 1-2, 2-2, and 3-4 according to FIGS. 11, 12, 13, 20, and 35, the integrated area at 4.1 V to 4.3 V according to the number of the charging and discharging cycles was normalized. In addition, in graphs for measuring the differential capacity of Examples 1-1, 1-2, 2-2, and 3-4 according to FIGS. 11, 12, 13, 20, and 35, a highest peak value in the range of 4.1 V to 4.3 V was measured and normalized as shown in [Table 10] to [Table 14] below.

**[Table 10]**

| Comparative Example 1 | |
|---|---|
| Cycle # | Charging (Intensity) |
| 1^{st} | 53.08 |
| 5^{th} | 53.23 |
| 25^{th} | 51.76 |
| 50^{th} | 49.85 |
| 75^{th} | 47.17 |
| 100^{th} | 42.81 |

**[Table 11]**

| Example 1-1 | |
|---|---|
| Cycle # | Charging (Intensity) |
| 1^{st} | 50.66 |
| 25^{th} | 51.26 |
| 50^{th} | 50.04 |
| 75^{th} | 49.91 |
| 100^{th} | 49.83 |

**[Table 12]**

| Example 1-2 | |
|---|---|
| Cycle # | Charging (Intensity) |
| 1^{st} | 49.75 |
| 25^{th} | 50.18 |
| 50^{th} | 48.47 |
| 75^{th} | 48.10 |
| 100^{th} | 47.45 |

**[Table 13]**

| Example 2-2 | |
|---|---|
| Cycle # | Charging (Intensity) |
| 1^{st} | 50.29 |
| 25^{th} | 59.23 |
| 50^{th} | 48.87 |
| 75^{th} | 46.87 |
| 100^{th} | 46.73 |

**[Table 14]**

| Example 3-4 | |
|---|---|
| Cycle # | Charging (Intensity) |
| 1^{st} | 53.03 |
| 25^{th} | 51.52 |
| 50^{th} | 51.44 |
| 75^{th} | 50.21 |
| 100- | 48.55 |

As can be found in FIG. 43, in the cases of secondary batteries including the cathode active materials doped with the addition metals according to Examples 1-1, 1-2, 2-2, and 3-4, it can be observed that the amount of reduction of the integrated area (capacity) at 4.1 V to 4.3 V according to the number of the charging and discharging cycles is 10 % or less, whereas in the case of a secondary battery including the cathode active material which is not doped with the addition metal according to Comparative Example 1, it can be observed that the integrated area (capacity) is significantly decreased at 4.1 V to 4.3 V according to the number of the charging and discharging cycles.

In addition, as can be found in FIG. 43, in the cases of the secondary batteries including the cathode active materials doped with the addition metals according to Examples 1-1, 1-2, 2-2, and 3-4, it can be observed that an amount of reduction of the highest peak value according to the number of the charging and discharging cycles is significantly low, whereas in the case of the secondary battery including the cathode active material which is not doped with the addition metal according to Comparative Example 1, it can be observed that the highest peak value is significantly decreased according to the number of the charging and discharging cycles.

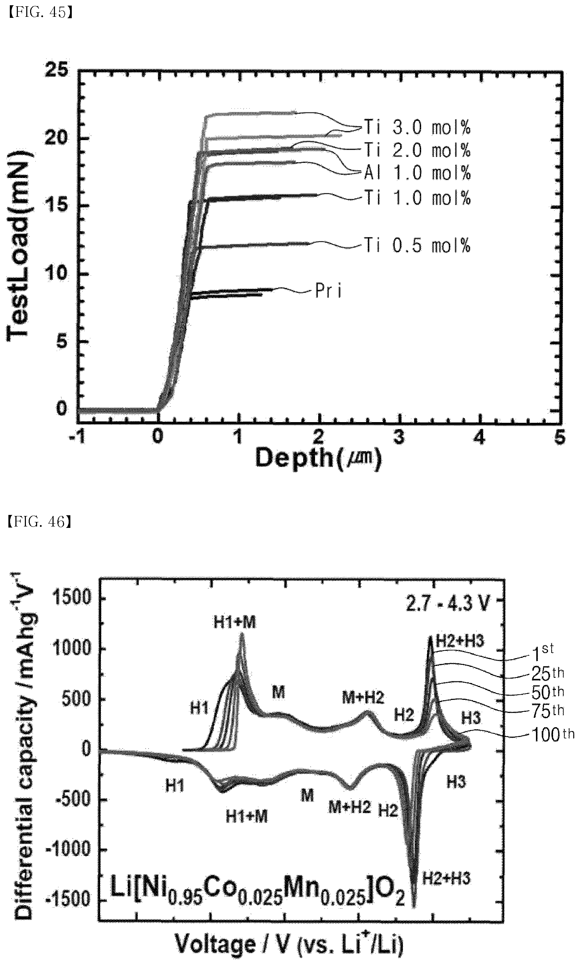

FIG. 45 is a graph obtained by measuring particle strengths of the cathode active materials according to Comparative Example 1, Examples 1-1 to 1-4, and Example 2-2 of the present invention.

Referring to FIG. 45, the particle strengths of the cathode active materials according to Comparative Example 1, Examples 1-1 to 1-4, and Example 2-2 were measured as shown in [Table 15] below.

**[Table 15]**

| Classification | Force | Diameter | Strength |
|---|---|---|---|
| | mN | um | MPa |
| Comparative Example 1 | 8.73 | 9.1 | 94.05 |
| | 8.35 | 8.91 | 93.79 |
| Example 1-1 | 11.93 | 9.01 | 131.13 |
| | 12.12 | 9.29 | 125.15 |
| Example 1-2 | 15.72 | 9.67 | 149.79 |
| | 15.48 | 9.1 | 166.64 |
| Example 1-3 | 19.13 | 9.77 | 178.84 |
| | 18.92 | 10.15 | 163.85 |
| Example 1-4 | 20.13 | 10.05 | 177.61 |
| | 21.80 | 10.15 | 188.75 |
| Example 2-2 | 23.98 | 10.6 | 189.7 |
| | 21.78 | 10.3 | 181.7 |

As can be found in [Table 15] and FIG. 45, in the cases of the cathode active materials doped with the addition metals according to Examples 1-1 to 1-4 and Example 2-2, it can be observed that the particle strength is remarkably excellent as compared with the cathode active material which is not doped with the addition metal according to Comparative Example 1.

In conclusion, as described with reference to FIGS. 22 to 24, according to the embodiment of the present invention, it can be observed that doping the cathode active material with the addition metal is an efficient way to improve structural, mechanical, and chemical stability of the cathode active material particles.

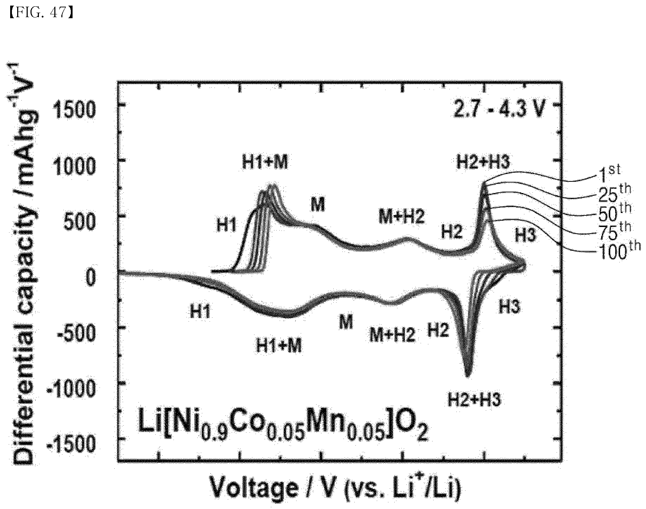

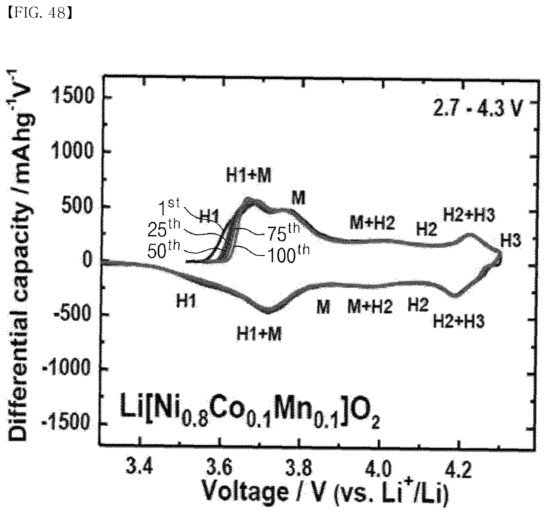

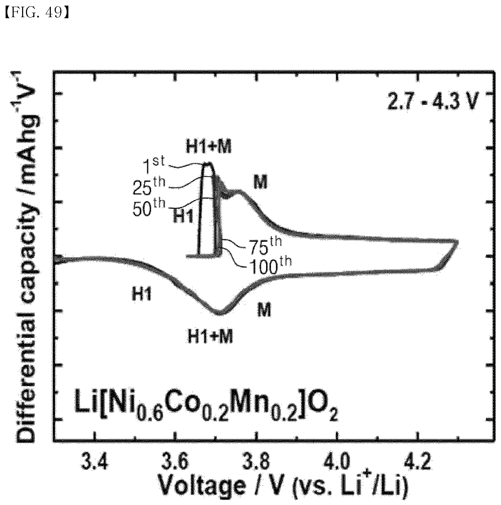

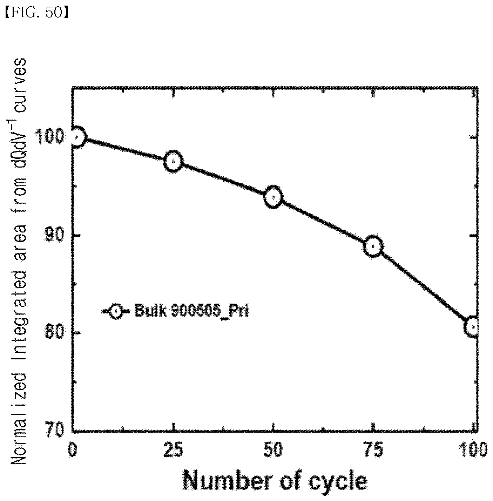

FIGS. 46 to 49 are graphs illustrating differential capacities to describe an amount of a change in H2 and H3 phases according to a nickel content, and FIG. 50 is a graph for describing a capacity change according to the number of charging and discharging cycles of the lithium secondary battery using the cathode active material of FIG. 47.

Referring to FIGS. 46 to 50, the cathode active materials according to Comparative Example 1 was prepared, in which the concentrations of nickel, cobalt, and manganese are controlled to 95:2.5:2.5, 90:5:5, 80:1:1, and 6:2:2, and the differential capacity according to the number of the charging and discharging cycles was measured within the range of 2.7 V to 4.3 V, at the evaluation temperature of 30 °C, and the charging condition of 0.5 C. In addition, as shown in FIG. 50, in graphs for measuring the differential capacity according to FIG. 47, the integrated area at 4.1 V to 4.3 V according to the number of the charging and discharging cycles was normalized.

As can be found in FIGS. 46 to 49, when the concentration of nickel is more than 60 mol%, it can be observed that H2 and H3 phases are generated in the range of 4.1 V to 4.3 V. In addition, as the concentration of nickel increases, it can be observed that the peak values of H2 and H3 phases are high in an initial charging and discharging cycle. In other words, as the concentration of nickel increases, it can be observed that the capacity is remarkably increased in the range of 4.1 V to 4.3 V.

Meanwhile, as the number of the charging and discharging cycles increases, it can be observed that the peak values of H2 and H3 phases are rapidly decreased in the range of 4.1 V to 4.3 V when the concentration of nickel is higher. In other words, as the concentration of nickel increases, it can be observed that the capacity is rapidly decreased in the range of 4.1 V to 4.3 V.

Therefore, according to the embodiment of the present invention, when manufacturing the cathode active material including the addition metal, as described above, the decrease in the peak values of H2 and H3 phases in the range of 4.1 V to 4.3 V may be minimized. In conclusion, the decrease in the capacity according to the number of the charging and discharging cycles may be minimized in the cathode active material having high-concentration nickel.

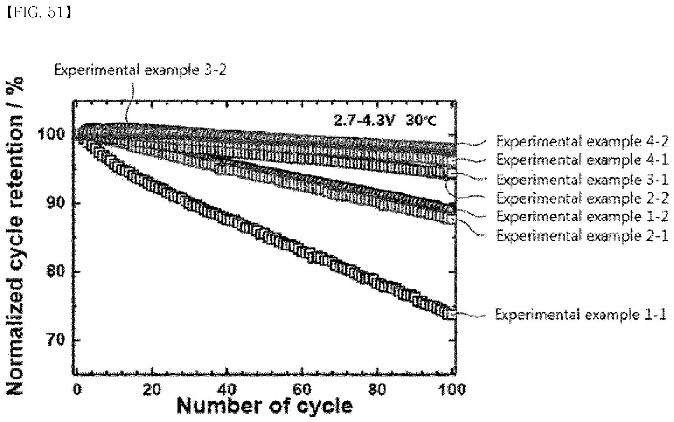

FIG. 51 is a graph obtained by measuring lifespan characteristics of the lithium secondary batteries including the cathode active materials based on a nickel concentration according to Examples of the present invention.

Referring to FIG. 51, as shown in [Table 16] below, the cathode active materials according to Experimental examples 1-1 to 4-2 and a lithium secondary battery including the same were prepared by the method according to the above-described Examples, in which the concentrations of nickel, cobalt, manganese, and the addition metal (Ti) are controlled, and lifetime retention characteristics according to the number of the charging and discharging cycles were measured as shown in [Table 17].

**[Table 16]**

| Classification | Ni (mol%) | Ti (mol%) | Co (mol%) | Mn (mol%) |
|---|---|---|---|---|
| Experimental example 1-1 | 100 | - | - | - |
| Experimental example 1-2 | 95 | 0.5 | - | - |
| Experimental example 2-1 | 90 | - | 5 | 5 |
| Experimental example 2-2 | 89.55 | 0.5 | 4.975 | 4.975 |
| Experimental example 3-1 | 80 | - | 10 | 10 |
| Experimental example 3-2 | 79.6 | 0.5 | 9.95 | 9.95 |
| Experimental example 4-1 | 60 | - | 20 | 20 |
| Experimental example 4-2 | 59.7 | 0.5 | 19.9 | 19.9 |

**[Table 17]**

| Classification | Capacity Increase Rate According to Addition Metal |
|---|---|
| Experimental example 1-1 | 15.1% |
| Experimental example 1-2 | |
| Experimental example 2-1 | 6.4% |
| Experimental example 2-2 | |
| Experimental example 3-1 | 3.5% |
| Experimental example 3-2 | |
| Experimental example 4-1 | 1.7% |
| Experimental example 4-2 | |

As shown in FIG. 51 and [Table 17], as the concentration of nickel increases, it can be observed that a capacity increase rate according to the addition metal, that is, efficiency of maintaining lifetime characteristics is significantly improved. In other words, in a high-concentration cathode active material containing high-concentration nickel having the concentration of at least 60 mol%, it can be observed that a lifetime retention effect of the addition metal according to the technical spirit of the embodiment of the present invention can be exhibited, and the lifetime retention effect is remarkably improved as the concentration of nickel increases.

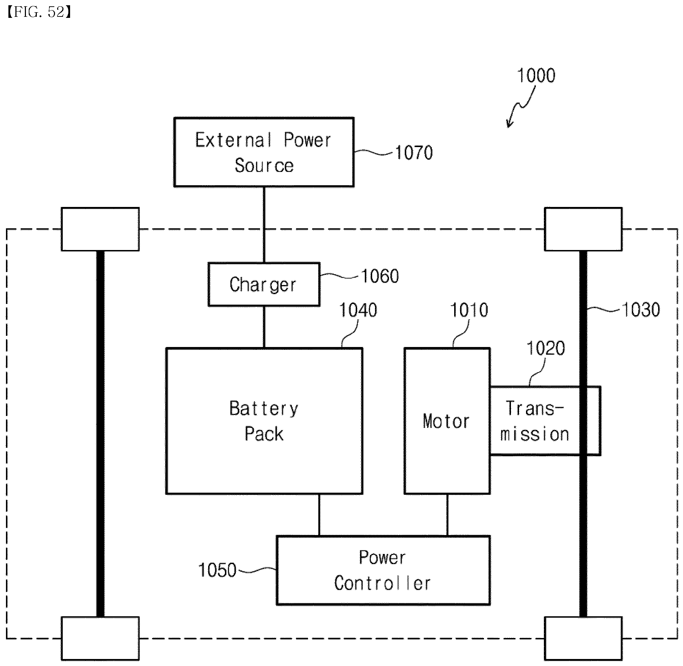

FIG. 52 is a block diagram illustrating an electric vehicle according to one embodiment of the present invention.

An electric vehicle 1000 according to one embodiment of the present invention may include at least one of a motor 1010, a transmission 1020, an axle 1030, a battery pack 1040, a power controller 1050, and a charger 1060.

The motor 1010 may convert electrical energy of the battery pack 1040 into kinetic energy. The motor 1010 may provide the converted kinetic energy to the axle 1030 through the transmission 1020. The motor 1010 may include a single motor or a plurality of motors. For example, when the motor 1010 includes a plurality of motors, the motor 1010 may include a front wheel motor configured to supply the kinetic energy to a front wheel axle, and a rear wheel motor configured to supply the kinetic energy to a rear wheel axle.

The transmission 1020 may be located between the motor 1010 and the axle 1030 to perform a gear shift such that the kinetic energy from the motor 1010 is commensurate with a driving environment desired by a driver and provide the kinetic energy to the axle 1030.

The battery pack 1040 may store the electrical energy from the charger 1060 and provide the stored electrical energy to the motor 1010. The battery pack 1040 may directly supply the electrical energy to the motor 1010, or may supply the electrical energy through the power controller 1050.

In this case, the battery pack 1040 may include at least one battery cell. In addition, the battery cell may include, but is not limited to, the lithium secondary battery including the cathode active material according to the embodiment of the present invention, and the battery cell may include various types of secondary batteries such as a lithium-based secondary battery. Meanwhile, the battery cell may be a term referring to an individual battery, and the battery pack may refer to a battery cell assembly in which individual battery cells are connected to each other to have a desired voltage and/or a desired capacity.

The power controller 1050 may control the battery pack 1040. In other words, the power controller 1050 may control a power from the battery pack 1040 to the motor 1010 to have a required voltage, a required current, a required waveform, etc. To this end, the power controller 1050 may include at least one of a passive power device and an active power device.

The charger 1060 may receive a power from an external power source 1070 shown in FIG. 46 and provide the received power to the battery pack 1040. The charger 1060 may control an overall charging state. For example, the charger 1060 may control a charging on/off state and a charging speed.

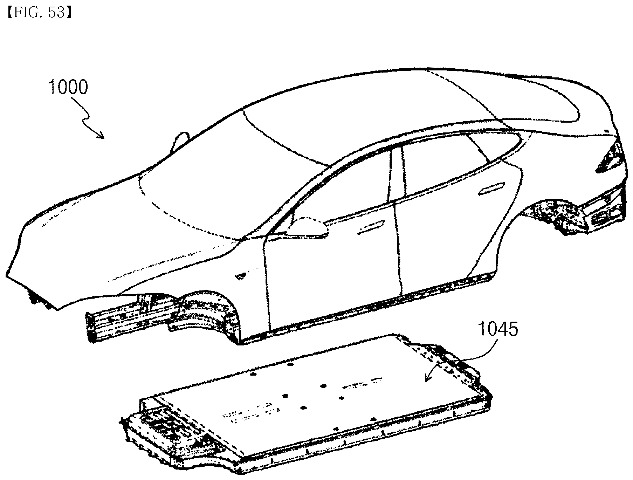

FIG. 53 is a perspective view illustrating the electric vehicle according to one embodiment of the present invention.

Referring to FIG. 53, the battery pack 1040 may be coupled to a bottom surface of the electric vehicle 1000. For example, the battery pack 1040 may have a shape having a width in a width direction of the electric vehicle 1000 and extending in a longitudinal direction of the vehicle 1000. In more detail, the battery pack 1040 may extend from a front suspension to a rear suspension. Accordingly, the battery pack 1040 may provide a space for packaging a larger number of battery cells. In addition, since the battery pack 1040 is coupled to a lower end of a vehicle body, the center of gravity of the vehicle body may be lowered, so that travelling safety of the electric vehicle 1000 can be improved.

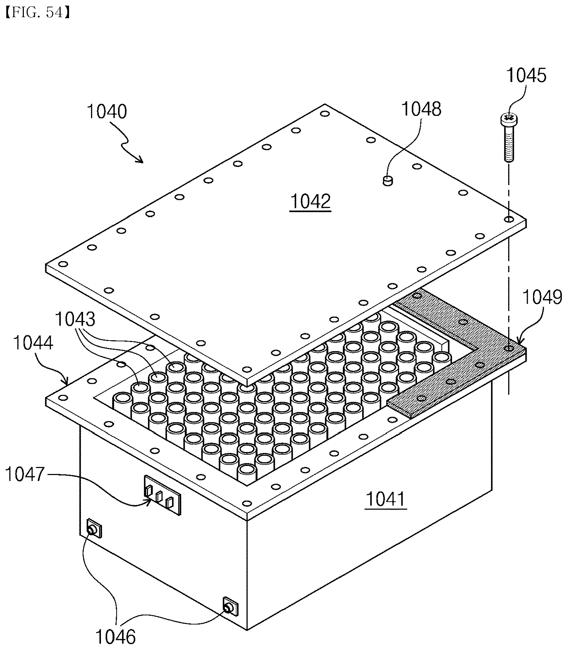

FIG. 54 is a view for describing a battery pack according to one embodiment of the present invention.

Referring to FIG. 54, the battery pack 1040 may store a plurality of battery cells 1043.

The battery pack 1040 may include a lower housing 1041 and an upper housing 1042. The lower housing 1041 may include a flange 1044, and a bolt 1045 may be fastened to the flange 1044 through a hole formed in the upper housing 1045 so as to couple the lower housing 1041 with the upper housing 1042.

In this case, in order to improve stability of the battery pack 1040, the lower and upper housings may be formed of a material capable of minimizing penetration of moisture and oxygen. For example, the lower and upper housings may be formed of at least one of aluminum, an aluminum alloy, plastic, and a carbon compound. In addition, an impermeable sealant 1049 may be located between the lower housing 1041 and the upper housing 1042.

In addition, the battery pack 1040 may include a component for controlling the battery cell 1043 or improving the stability. For example, the battery pack 1040 may include a control terminal 1047 configured to control the battery cell 1043 inside the battery pack 1040. In addition, for example, the battery pack 1040 may include a cooling line 1046 to prevent thermal runaway of the battery cell 1043 or to control a temperature of the battery cell 1043. Further, for example, the battery pack 1040 may include a gas ejection port 1048 configured to eject a gas which is present in the battery pack 1040.

Although the preferred embodiments of the present invention have been described in detail as described above, the scope of the present invention is not limited to the embodiments and should be construed by the appended claims. Further, it should be understood that those skilled in the art to which the present invention pertains may variously change and modify the present invention without departing from the scope of the present invention.

The cathode active material and the lithium secondary battery including the same according to the embodiment of the present invention may be applied in various industrial fields such as an electric vehicle, a portable mobile device, and an energy storage device.

## Claims

1. A cathode active material comprising:
at least 60 mol% of nickel;
lithium; and
an addition metal,
wherein the cathode active material has a first crystal structure having an intrinsic lattice constant in a c-axis direction,
wherein a second crystal structure having a lattice constant longer than the lattice constant of the first crystal structure in the c-axis direction and a third crystal structure having a lattice constant shorter than the lattice constant of the first crystal structure in the c-axis direction are generated in a charging and discharging process, and
wherein an amount of a change in a production ratio of the second crystal structure and the third crystal structure, which are generated in the charging and discharging process, is reduced by the addition metal.

2. The cathode active material of claim 1, wherein when a number of charging and discharging cycles is 100 in a graph for measuring a differential capacity according to the number of charging and discharging cycles, an amount of reduction of an integrated area is in a range of 4.1 V to 4.3 V is 10 % or less.

3. The cathode active material of claim 1, wherein the addition metal includes at least one of zirconium, titanium, aluminum, tungsten, molybdenum, niobium, tantalum, bismuth, ruthenium, magnesium, zinc, gallium, vanadium, chromium, calcium, strontium, or tin.

4. The cathode active material of claim 1, wherein the addition metal includes titanium, and
wherein the addition metal is contained less than 3 mol%.

5. The cathode active material of claim 1, wherein the addition metal includes zirconium, and
wherein the addition metal is contained less than 2 mol%.

6. The cathode active material of claim 1, wherein the addition metal includes aluminum, and
wherein the addition metal is contained less than 2 mol%.

7. The cathode active material of claim 1, wherein the first crystal structure includes a trigonal crystal structure.

8. The cathode active material of claim 1, wherein the addition metal has a uniform concentration in particles.

9. A cathode active material comprising:
at least 60 mol% of nickel;
lithium; and
an addition metal,
wherein the cathode active material has a first crystal structure having an intrinsic lattice constant in a c-axis direction,
wherein a second crystal structure having a lattice constant longer than the lattice constant of the first crystal structure in the c-axis direction and a third crystal structure having a lattice constant shorter than the lattice constant of the first crystal structure in the c-axis direction are generated in a charging and discharging process, and
wherein an amount of a change in a production ratio of the second crystal structure and the third crystal structure, which are generated in the charging and discharging process, is controlled according to a concentration of the nickel and a concentration of the addition metal to control a charging and discharging capacity in a range of 4.1 V to 4.3 V.

10. The cathode active material of claim 9, further comprising secondary particles in which primary particles are aggregated,
wherein the primary particles extend from a center of the secondary particles in a radial direction.

11. A lithium secondary battery comprising:
a cathode including a cathode active material according to one of claims 1 to 10;
an anode spaced apart from the cathode; and
an electrolyte disposed between the cathode and the anode.

12. A method for manufacturing a cathode active material, the method comprising:
preparing a cathode active material precursor including at least one of nickel, cobalt, manganese, or aluminum;
mixing an addition metal source including an addition metal with the cathode active material precursor; and
baking a mixture of the cathode active material precursor and the addition metal source with a lithium salt.

13. The method of claim 12, wherein the cathode active material precursor includes nickel, and
wherein the nickel is contained by at least 60 mol%.

14. The method of claim 12, further comprising mixing the mixture of the cathode active material precursor and the addition metal source with the lithium salt before the baking of the mixture of the cathode active material precursor and the addition metal source with the lithium salt.

15. The method of claim 12, wherein the addition metal source includes an oxide of the addition metal and a hydroxide of the addition metal.
